(19) Europäisches Patentamt
European Patent Office
Office européen des brevets

(11) EP 2 947 110 B1

# (12) EUROPEAN PATENT SPECIFICATION

(45) Date of publication and mention of the grant of the patent:
**24.03.2021 Bulletin 2021/12**

(51) Int Cl.:
***C08G 64/30*** *(2006.01)*

(21) Application number: **14382174.2**

(22) Date of filing: **19.05.2014**

## (54) MELT FILTER ALIGNMENT IN A CONTINUOUS MELT POLYCARBONATE PRODUCTION PROCESS

SCHMELZFILTERAUSRICHTUNG IN EINEM KONTINUIERLICHEN SCHMELZPOLYCARBONATHERSTELLUNGSVERFAHREN

ALIGNEMENT DE FILTRE À CHAUD DANS UN PROCESSUS DE PRODUCTION DE POLYCARBONATE FONDU CONTINU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.11.2015 Bulletin 2015/48**

(73) Proprietor: **SABIC Global Technologies B.V.**
**4612 PX Bergen op Zoom (NL)**

(72) Inventors:
- **Vic Fernàndez, Ignacio**
  **30390 La Aljorra, Cartagena (ES)**
- **Olmedo Fernàndez, Fernando**
  **30390 La Aljorra, Cartagena (ES)**
- **Hernàndez Llor, Raúl**
  **30390 La Aljorra, Cartagena (ES)**

(74) Representative: **Sabic Intellectual Property Group**
**Sabic Intellectual Property Department**
**P.O. Box 3008**
**6160 GA Geleen (NL)**

(56) References cited:
**EP-A1- 1 760 105**
**EP-A1- 2 174 970**
**EP-A1- 2 692 765**
**EP-A1- 2 703 424**
**JP-A- H06 234 845**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 947 110 B1

## Description

TECHNICAL FIELD

This disclosure relates to a process for switching a melt filter in a melt polycarbonate polymerization process.

BACKGROUND

In melt polymerization processes of producing polycarbonate, a melt filter is often used after polymerization to remove contaminants such as gels, agglomerated additives, and carbonized polymer particles from the polycarbonate. The successful removal of such contaminants can be especially important in producing polycarbonates with good optical properties.

When a change in pressure across the melt filter reaches a certain level, the filter needs to be replaced. Replacement entails shutting down the system, and replacing the spent filter with a new filter. This process can take several hours to properly shut down the system, remove the spent filter, properly align the new filter, and restart the system. In an attempt to expedite the process, the alignment of the new filter is often rushed. This can result in a misaligned filter which will likely become damaged. A damaged filter, even having just a small break, that is not easily detectable with, for example, a pressure sensor, can disadvantageously result in the presence of particulates in the product polycarbonate. Consequently, the filter will again need to be replaced.

Clearly, filter replacement in any melt polycarbonate process is a source of reduced efficiency and hence and area for improvement. This is particularly the case in larger production melt polycarbonate processes as the impact of each hour of down time is more significant. Many typical melt polycarbonate process plants have a capacity of less than or equal to 35 tons per day. Replacement of a melt filter in such a plant can result in productivity loss of 2 to 4 hours of production. In larger polycarbonate plants, the productivity loss can be in the order of tenths of tons.

Improved methods for changing a melt filter in a melt polymerization process (e.g., a continuous melt polymerization process) are needed.

EP 1760105 discloses a method for stably producing an aromatic polycarbonate, which comprises continuously reacting an aromatic dihydroxy compound with a diaryl carbonate in a closed, reactor-pipeline system, said closed, reactor-pipeline system comprising: a plurality of reactors which are liquid-tightly connected through a pipeline toward an outlet for a final aromatic polycarbonate product, said pipeline comprising one or more pipes, wherein said plurality of reactors include at least two reactors connected in series, and at least one filter secured in the pipe or pipes of said reactor-pipeline system, wherein the or each filter is simultaneously or separately taken out to the outside of said reactor-pipeline system and subjected to washing in the outside of said reactor-pipeline system, followed by returning of the resultant washed filter into the inside of the pipe or pipes of said reactor-pipeline system, said washing being performed with the below-mentioned washing agents used in the following order: an aqueous solution of a basic compound, an aromatic monohydroxy compound, and a molten mixture of an aromatic dihydroxy compound and a diaryl carbonate, said molten mixture containing a basic compound in an amount of from 1 to 10,000 ppb.

BRIEF DESCRIPTION

Disclosed herein is a method for switching a melt filter in a melt polycarbonate polymerization process.

The invention relates to a continuous melt polycarbonate polymerization process, comprising melt polymerizing a carbonate compound and dihydroxy compound in the presence of a catalyst composition to form a polymerized polycarbonate; adding a viscosity reducing agent to polymerized polycarbonate upstream of a first melt filter to form an adjusted polycarbonate; replacing the first melt filter with a replacement melt filter; introducing the adjusted polycarbonate to the replacement melt filter; and reducing the addition rate of the viscosity reducing agent until the addition rate is 0 mol/hr.

In an embodiment, a continuous melt polycarbonate polymerization process, comprises melt polymerizing a carbonate compound and dihydroxy compound in the presence of a catalyst composition to form a polymerized polycarbonate; adding a viscosity reducing agent to polymerized polycarbonate upstream of a first melt filter to form an adjusted polycarbonate; diverting the flow of the adjusted polycarbonate to a replacement melt filter; and reducing the addition rate of the viscosity reducing agent until the addition rate 0.

The above described and other features are exemplified by the following figures and detailed description.

BRIEF DESCRIPTION OF THE DRAWINGS

Refer now to the figures, which are exemplary embodiments, and wherein the like elements are numbered alike.

FIG. 1 is an illustration of a process for changing a melt filter;

FIG. 2 is an illustration of a process for changing a melt filter where a viscosity reducing agent is added;
FIG. 3 is a graphical illustration of the polycarbonate viscosity at the extruder outlet and the change in pressure with time of Example 1;
FIG. 4 is a graphical illustration of the polycarbonate viscosity at the extruder outlet and the change in pressure with time of Example 2;
FIG. 5 is a graphical illustration of the polycarbonate viscosity at the extruder outlet and the change in pressure with time of Example 3;
FIG. 6 is a graphical illustration of the polycarbonate viscosity at the extruder outlet and the change in pressure with time of Example 4;
FIG. 7 is a graphical illustration of the polycarbonate viscosity at the extruder outlet and the change in pressure with time of Example 5;
FIG. 8 is a graphical illustration of the polycarbonate viscosity at the extruder outlet and the change in pressure with time of Example 6;
FIG. 9 is a graphical illustration of the polycarbonate viscosity at the extruder outlet and the change in pressure with time of Example 7;
FIG. 10 is a graphical illustration of the polycarbonate viscosity at the extruder outlet and the change in pressure with time of Example 8;
FIG. 11 is a graphical illustration of the polycarbonate viscosity at the extruder outlet and the change in pressure with time of Example 9;
FIG. 12 is a graphical illustration of the polycarbonate viscosity at the extruder outlet and the change in pressure with time of Example 10;
FIG. 13 is a graphical illustration of the polycarbonate viscosity at the extruder outlet and the change in pressure with time of Example 11;
FIG. 14 is a graphical illustration of the polycarbonate viscosity at the extruder outlet and the change in pressure with time of Example 12;
FIG. 15 is a graphical illustration of the polycarbonate viscosity at the extruder outlet and the change in pressure with time of Example 13;
FIG. 16 is a graphical illustration of the polycarbonate viscosity at the extruder outlet and the change in pressure with time of Example 14;
FIG. 17 is a graphical illustration of the polycarbonate viscosity at the extruder outlet and the change in pressure with time of Example 15; and
FIG. 18 is a graphical illustration of the pressure in the final polymerization unit and the change in pressure with time of Example 16.

## DETAILED DESCRIPTION

When changing a filter in a polycarbonate polymerization, the viscosity of the polycarbonate needs to be controlled as introducing polycarbonate with a high viscosity (e.g., greater than or equal to 300 Pascal seconds (Pa·s), to a new filter can result in damage to filter if the pressure differential through the filter exceeds the filter's operating parameters (e.g., the pressure differential can exceed 80 bars guage (barg), for example, greater than 100 barg). Damage to the filter (e.g., by distorting, cracking, or otherwise failing), allows gels and particulates formed during the production process to escape and contaminate the polycarbonate product. Previous methods of changing a filter include changing the processing conditions (e.g., temperatures, pressures, flow rates) from an initial state to reduce the viscosity of the polycarbonate, replacing the melt filter, introducing the reduced viscosity polycarbonate to the filter, and slowly ramping the processing conditions back to the initial state. This process results in many disadvantages such as long change over time and large amounts of waste production due to damage to the replacement melt filter.

In the present process for exchanging the melt filter, the Applicants found that by adding an amount of a viscosity reducing agent to the polymerization unit they could control viscosity during the melt filter replacement and alignment process without having to change the process conditions in the polymerization unit (e.g., without system shutdown and without changing system processing conditions (e.g., temperatures, pressures, flow rates). For example, the flow rates, pressures, and temperatures, in the melt polymerization upstream of the melt filter, change by less than or equal to 1% based on the stream's average flow rate, pressure, and temperature, respectively, during normal polymerization conditions, (i.e., the average polymerization conditions when operating at steady state). As used herein steady state is the operating condition to attain a desired molecular weight polycarbonate, other than the conditions during start-up, changing of the melt filter, and shutdown. The process comprises adding a viscosity reducing agent to a polycarbonate stream, upstream of a replacement melt filter such that when the polycarbonate is introduced to the replacement melt filter, a change in pressure across the replacement melt filter will be within the replacement melt filter's use parameters (i.e., below a pressure differential that will damage the melt filter). Once the reduced viscosity polycarbonate is flowing through

the replacement melt filter, the amount of the viscosity reducing agent added to the polycarbonate stream is decreased until no viscosity reducing agent is added to the polycarbonate stream and the polycarbonate viscosity has returned to a desired viscosity. The rate at which the amount of viscosity reducing agent is reduced can be based upon the pressure differential across the replacement melt filter as the polycarbonate viscosity increases (e.g., to prevent the pressure differential from exceeding the operating parameters of the replacement melt filter). Optionally, the pressure differential can be monitored with pressure sensor(s) and the rate of reduction of the viscosity reducing agent can be controlled using a controller, based upon the sensed pressure differential.

The current process has the advantage of one or more of: a hold-up can be avoided, the change over time can be reduced (e.g., the change over time can be reduced from 3 hours to less than 20 minutes (min)), and the amount of waste or off-spec polycarbonate (as used herein off-spec polycarbonate refers to polycarbonate that does not meet the desired specifications, where, for example, the molecular weight is too low or too high, the amount of contaminants in the polycarbonate is too high, or the properties are not acceptable (e.g., transparency, haze, mechanical properties)) generated during the melt filter alignment process can be reduced. For example, in a large production facility with a production rate of 100,000 tons per year (tons/yr) a standard change over time of 3 hours would result in 36 tons of waste and/or off-spec polycarbonate. Reducing the change over time to 1/10th of that time reduces the amount of waste and/or off-spec polycarbonate generated to just 4 tons. Hence, significant savings and improvements can be realized with the present process, which is especially evident in large scale melt polycarbonate production plants, e.g., greater than 55,000 tons per day (tons/day), particularly greater than or equal to 75,000 tons/day, and especially greater than or equal to 100,000 tons/day, and even greater than or equal to 125,000 tons/day.

After melt filter alignment, the rate of addition of the viscosity reducing agent can be decreased to zero and the polymer viscosity can be restored to its original value.

"Polycarbonate" as used herein means a polymer or copolymer having repeating structural carbonate units of formula (1)

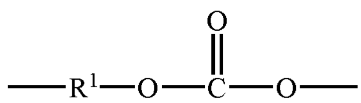

(1)

wherein at least 60 percent of the total number of $R^1$ groups are aromatic, or each $R^1$ contains at least one $C_{6-30}$ aromatic group. Specifically, each $R^1$ can be derived from a dihydroxy compound such as an aromatic dihydroxy compound of formula (2) or a bisphenol of formula (3).

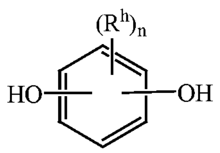

(2)

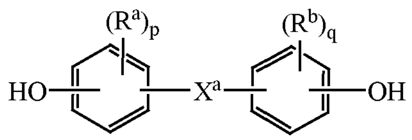

(3)

In formula (2), each $R^h$ is independently a halogen atom, for example bromine, a $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4.

In formula (3), $R^a$ and $R^b$ are each independently a halogen, $C_{1-12}$ alkoxy, or $C_{1-12}$ alkyl; and p and q are each independently integers of 0 to 4, such that when p or q is less than 4, the valence of each carbon of the ring is filled by hydrogen. Accordingly, p and q can each be 0, or p and q can each be 1, and $R^a$ and $R^b$ can each be a $C_{1-3}$ alkyl group, specifically methyl, disposed meta to the hydroxy group on each arylene group. $X^a$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group, for example, a single bond, -O-, -S-, -S(O)-, - $S(O)_2$-, -C(O)-, or a $C_{1-18}$ organic group, which can be cyclic or acyclic, aromatic or non-aromatic, and can further comprise heteroatoms such as halogens, oxygen, nitrogen, sulfur, silicon, or phosphorous. For example, $X^a$ can be a substituted or unsubstituted $C_{3-18}$ cycloalkylidene; a $C_{1-25}$ alkylidene of the formula -C($R^c$)($R^d$) - wherein $R^c$ and $R^d$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl; or a group of the formula -C(=$R^e$)- wherein $R^e$ is a divalent $C_{1-12}$ hydrocarbon group.

Some illustrative examples of specific dihydroxy compounds include the following: bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenyl ethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA", in which in which each of $A^1$ and $A^2$ is p-phenylene and $Y^1$ is isopropylidene in formula (3)), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), and from bisphenol A and 1,1-bis(4-hydroxy-3-methylphenyl)-3,3,5-trimethylcyclohexane (isophorone bisphenol).

The polycarbonate can be a linear homopolymer containing bisphenol A carbonate units (BPA-PC); or a branched, cyanophenyl end-capped BPA-PC

The polycarbonate can be a copolycarbonate. Specific copolycarbonates include those derived from bisphenol A and bulky bisphenol carbonate units, i.e., derived from bisphenols containing at least 12 carbon atoms, for example 12 to 60 carbon atoms, specifically, 20 to 40 carbon atoms. Examples of such copolycarbonates include copolycarbonates comprising bisphenol A carbonate units and 2-phenyl-3,3'-bis(4-hydroxyphenyl) phthalimidine carbonate units (a BPA-PPPBP copolymer), a copolymer comprising bisphenol A carbonate units and 1,1-bis(4-hydroxy-3-methylphenyl)cyclohexane carbonate units (a BPA-DMBPC copolymer), and a copolymer comprising bisphenol A carbonate units and isophorone bisphenol carbonate units (available, for example, under the trade name APEC from Bayer).

Polycarbonates manufactured and purified as described herein are suitable for use in a wide variety of compositions and applications as is known in the art. Thus, an additive composition can be added, for example, in an extruder, to the purified polycarbonate form a polycarbonate composition. The additive composition can be one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble and/or non-soluble in polycarbonate.

The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g. , a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

The polycarbonate can be made by a melt polymerization process, by co-reacting, in a molten state, monomers such as a dihydroxy reactant and a carbonate compound, such as phosgene or diphenyl carbonate. The melt polymerization process can be a batch or a continuous melt process. In either case, the melt polymerization conditions used can comprise two or more distinct reaction stages, for example, a first reaction stage in which the starting aromatic dihydroxy compound and diaryl carbonate are converted into an oligomeric polycarbonate and a second reaction stage wherein the oligomeric polycarbonate formed in the first reaction stage is converted to high molecular weight polycarbonate. Such "staged" polymerization reaction conditions are especially suitable for use in continuous polymerization

systems wherein the starting monomers are oligomerized in a first reaction vessel and the oligomeric polycarbonate formed therein is continuously transferred to one or more downstream reactors in which the oligomeric polycarbonate is converted to high molecular weight polycarbonate. Typically, in the oligomerization stage the oligomeric polycarbonate produced has a number average molecular weight (Mn) of 1,000 to 7,500 Daltons. In one or more subsequent polymerization stages, the number average molecular weight of the polycarbonate can be increased to 8,000 to 25,000 Daltons (using polycarbonate standard).

The term "melt polymerization conditions" is understood to mean those conditions necessary to affect reaction between a dihydroxy compound and a carbonate compound in the presence of a transesterification catalyst and to attain a desired molecular weight polycarbonate. Although, solvents are generally not used in the process, and the reactants aromatic dihydroxy compound and the carbonate compound are in a molten state, the dihydroxy compound and/or the carbonate compound can be added to the polymerization unit as a solvent mixture, such as a mixture with acetone. The reaction temperature can be 100°C to 350°C, specifically, 180°C to 310°C. The pressure can be at atmospheric pressure, supra-atmospheric pressure, or a range of pressures from atmospheric pressure to 15 torr in the initial stages of the reaction, and at a reduced pressure at later stages, for example, 0.2 to 15 torr. The reaction time is generally 0.1 hours to 10 hours.

A transesterification catalyst(s) can be employed in the polymerization. Such catalysts include phase transfer catalysts of formula $(R^3)_4Q^+X$, wherein each $R^3$ is the same or different, and is a Ci-io alkyl group; Q is a nitrogen or phosphorus atom; and X is a halogen atom or a $C_{1-8}$ alkoxy group or $C_{6-18}$ aryloxy group. Transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing. The catalyst can comprise a potassium sodium phosphate of the formula $NaKHPO_4$.

Catalysts used in the melt transesterification polymerization production of polycarbonates can include alpha and/or beta catalysts. Beta catalysts are typically volatile and degrade at elevated temperatures and can therefore be used at early low-temperature polymerization stages. The catalyst can comprise potassium hydroxide, sodium hydroxide, cesium carbonate, tetramethyl phosphonium hydroxide, tetramethyl phosphonium acetate, tetramethyl phosphonium formate, tetrabutyl phosphonium hydroxide, tetrabutyl phosphonium acetate (TBPA), tetraphenyl phosphonium acetate (TPPA), tetraphenyl phosphonium phenoxide, or a combination comprising one or more of the foregoing.

Possible beta catalyst(s) can comprise a quaternary ammonium compound, a quaternary phosphonium compound, or a combination comprising at least one of the foregoing. The quaternary ammonium compound can be a compound of the structure $(R^4)_4N^+X^-$, wherein each $R^4$ is the same or different, and is a $C_{1-20}$ alkyl, a $C_{4-20}$ cycloalkyl, or a $C_{4-20}$ aryl; and $X^-$ is an organic or inorganic anion, for example a hydroxide, halide, acetate, phenoxide, carboxylate, sulfonate, sulfate, formate, carbonate, or bicarbonate. Examples of organic quaternary ammonium compounds include tetramethyl ammonium hydroxide, tetrabutyl ammonium hydroxide, tetramethyl ammonium acetate, tetramethyl ammonium formate, tetrabutyl ammonium acetate, and combinations comprising at least one of the foregoing. Tetramethyl ammonium hydroxide is often used.

The quaternary phosphonium compound can be a compound of the structure $(R^5)_4P^+X^-$, wherein each $R^5$ is the same or different, and is a $C_{1-20}$ alkyl, a $C_{4-20}$ cycloalkyl, or a $C_{4-20}$ aryl; and $X^-$ is an organic or inorganic anion, for example a hydroxide, halide, carboxylate, sulfonate, sulfate, formate, carbonate, or bicarbonate. Where $X^-$ is a polyvalent anion such as carbonate or sulfate it is understood that the positive and negative charges in the quaternary ammonium and phosphonium structures are properly balanced. For example, where $R^{20}$ to $R^{23}$ are each methyls and $X^-$ is carbonate, it is understood that $X^-$ represents 2 $(CO_3^{-2})$. Examples of organic quaternary phosphonium compounds include tetramethyl phosphonium hydroxide, tetramethyl phosphonium acetate, tetramethyl phosphonium formate, tetrabutyl phosphonium hydroxide, tetrabutyl phosphonium acetate (TBPA), tetraphenyl phosphonium acetate (TPPA), tetraphenyl phosphonium phenoxide, and combinations comprising at least one of the foregoing.

The amount of beta catalyst employed is typically based upon the total number of moles of dihydroxy compound employed in the polymerization reaction. When referring to the ratio of beta catalyst, for example, phosphonium salt, to all dihydroxy compounds employed in the polymerization reaction, it is convenient to refer to moles of phosphonium salt per mole of the dihydroxy compound(s), meaning the number of moles of phosphonium salt divided by the sum of the moles of each individual dihydroxy compound present in the reaction mixture. The amount of beta catalyst (e.g., organic ammonium or phosphonium salts) employed typically will be 1 x $10^{-2}$ to 1 x $10^{-5}$, specifically, 1 x $10^{-3}$ to 1 x $10^{-4}$ moles per total mole of the dihydroxy compounds in the reaction mixture.

Alpha catalysts are typically more thermally stable and less volatile than beta catalysts. Nearly all of the alpha catalyst (e.g., greater than 80 wt%, specifically greater than 90%) survives the polymerization process. As such, this catalyst is available to catalyze additional (and generally unwanted) reactions downstream of the polymerization process, such as in the extruder.

The alpha catalyst can comprise a source of alkali or alkaline earth ions. The sources of these ions include alkaline earth hydroxides such as magnesium hydroxide and calcium hydroxide. Sources of alkali metal ions can include the alkali metal hydroxides such as illustrated by lithium hydroxide, sodium hydroxide, potassium hydroxide, and combinations comprising at least one of the foregoing. Examples of alkaline earth metal hydroxides are calcium hydroxide, magnesium hydroxide, and combinations comprising at least one of the foregoing. Of these, sodium hydroxide is particularly desirable. The alpha catalyst typically will be used in an amount sufficient to provide 1 x $10^{-2}$ to 1 x $10^{-8}$ moles, specifically, 1 x $10^{-4}$ to 1 x $10^{-7}$ moles of metal hydroxide per mole of the dihydroxy compounds employed. Other possible sources of alkaline earth and alkali metal ions include salts of carboxylic acids (such as sodium acetate) and derivatives of ethylene diamine tetraacetic acid (EDTA) (such as EDTA tetrasodium salt, and EDTA magnesium disodium salt), as well as combinations comprising at least one of the foregoing. For example, the alpha catalyst can comprise alkali metal salt(s) of a carboxylic acid, alkaline earth metal salt(s) of a carboxylic acid, or a combination comprising at least one of the foregoing. In another example, the alpha catalyst comprises $Na_2Mg$ EDTA or a salt thereof.

The alpha transesterification catalyst can also, or alternatively, comprise salt(s) of a non-volatile inorganic acid. For example, the alpha catalyst can comprise salt(s) of a non-volatile inorganic acid such as $NaH_2PO_3$, $NaH_2PO_4$, $Na_2HPO_3$, $NaHCO_3$, $Na_2CO_3$, $KH_2PO_4$, $CsH_2PO_4$, $Cs_2HPO_4$, $Cs_2CO_3$, and combinations comprising at least one of the foregoing. Alternatively, or in addition, the alpha transesterification catalyst can comprise mixed alkali metal salt(s) of phosphoric acid, such as $NaKHPO_4$, $CsNaHPO_4$, $CsKHPO_4$, and combinations comprising at least one of the foregoing.

Once a desired molecular weight polycarbonate has been formed, a quencher can be added to the polycarbonate to prevent further reaction, Fries rearrangement, and/or undesirable reactions with additives subsequently added. The quencher can be added, for example, after final polymerization, e.g., upstream of and/or to a finishing extruder to reduce the activity of the catalyst. As used herein, "final polymerization" is intended to mean a where the Mw does not increase by greater than 10 wt%, preferably doesn't increase by greater than or equal to 5 wt% thereafter). Quenching agents can include boric acid esters (e.g., $B(OCH_3)_3$, $B(OCH_2CH_3)_3$, and $B(OC_6H_6)_3$, zinc borate, boron phosphate, aluminum stearate, aluminum silicate, zirconium carbonate, zirconium $C_1$-$C_{12}$ alkoxides, zirconium hydroxycarboxylates, gallium phosphide, gallium antimonide, germanium oxide, $C_1$-$C_{32}$ organogermanium compounds, $C_4$-$C_{32}$ tetraorganotin tin compound, $C_6$-$C_{32}$ hexaorganotin compound (e.g., $[(C_6H_6O)Sn(CH_2CH_2CH_2CH_3)_2]_2O)$, $Sb_2O_3$, antimony oxide, $C_1$-$C_{32}$ alkylantimony, bismuth oxide, $C_1$-$C_{12}$ alkylbismuth, zinc acetate, zinc stearate, $C_1$-$C_{32}$ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, $C_1$-$C_{12}$ dialkyl sulfates (e.g., dimethyl sulfate and dibutyl sulfate), alkyl sulfonic esters of the formula $R_1SO_3R_2$ wherein $R_1$ is hydrogen, $C_1$-$C_{12}$ alkyl, $C_6$-$C_{18}$ aryl, or $C_7$-$C_{19}$ alkylaryl, and $R_2$ is $C_1$-$C_{12}$ alkyl, $C_6$-$C_{18}$ aryl, or $C_7$-$C_{19}$ alkylaryl (e.g., benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p-toluenesulfonate, in particular alkyl tosylates such as n-butyl tosylate), sulfonic acid phosphonium salts of the formula $(R^aSO_3^-)(PR^b_4)^+$ wherein $R^a$ is hydrogen, $C_1$-$C_{12}$ alkyl, $C_6$-$C_{18}$ aryl, or $C_7$-$C_{19}$ alkylaryl, and each $R^b$ is independently hydrogen, $C_1$-$C_{12}$ alkyl or $C_6$-$C_{18}$ aryl, sulfonic acid derivatives of the formula $A^1$-$(Y^1$-$SO_3X^1)_m$ wherein $A^1$ is a $C_1$-$C_{40}$ hydrocarbon group having a valence of m, $Y^1$ is a single bond or an oxygen atom, $X^1$ is a secondary or tertiary alkyl group of the formula $-CR^{15}R^{16}R^{17}$, a metal cation of one equivalent, an ammonium cation (e.g, $NR^b_3{}^+$ wherein each $R^b$ is independently hydrogen, Ci-$C_{12}$ alkyl or $C_6$-$C_{18}$ aryl), or a phosphonium (e.g, $PR^b_4{}^+$ wherein each $R^b$ is independently hydrogen, $C_1$-$C_{12}$ alkyl or $C_6$-$C_{18}$ aryl) wherein $R^{15}$ is a hydrogen atom or an alkyl group having 1 to 5 carbon atoms, $R^{16}$ is a hydrogen atom, a phenyl group or an alky group having 1 to 5 carbon atoms, and $R^{17}$ is the same as or different from $R^{15}$ and has the same definition as $R^{15}$, provided that two of $R^{15}$, $R^{16}$, and $R^{17}$ cannot be hydrogen atoms, and m is an integer of 1 to 4, provided that when $Y^1$ is a single bond, all of $X^1$ in an amount of m cannot be metal cations of one equivalent, a compound of the formula $^+X^2$-$A^2$-$Y^1$-$SO_3^-$ wherein $A^2$ is a divalent hydrocarbon group, $^+X^2$ is a secondary, tertiary or quaternary ammonium cation or a secondary (e.g., , tertiary or quaternary phosphonium cation, and $Y^1$ is a single bond or an oxygen atom, a compound of the formula $A^3$-$(^+X^3)_n \cdot (R$-$Y^1$-$SO_3^-)_n$ wherein $A^3$ is a $C_1$-$C_{40}$ hydrocarbon group having a valence of n, $^+X^3$ is a secondary, tertiary or quaternary ammonium cation (e.g., $NR^b_3{}^+$ wherein each $R^b$ is independently hydrogen, $C_1$-$C_{12}$ alkyl or $C_6$-$C_{18}$ aryl), or a secondary, tertiary or quaternary phosphonium cation (e.g., $PR^b_4{}^+$ wherein each $R^b$ is independently hydrogen, $C_1$-$C_{12}$ alkyl or $C_6$-$C_{18}$ aryl), R is a monovalent $C_1$-$C_{40}$ hydrocarbon group, n is an integer of 2 to 4, and $Y^1$ is a single bond or an oxygen atom, a compound of the formula $A^5$-$Ad^1$-$A^4$-$(Ad^2$-$A^5)_l$ wherein $A^5$ is a monovalent or divalent $C_1$-$C_{40}$ hydrocarbon group, $A^4$ is a divalent $C_1$-$C_{40}$ hydrocarbon group, each of $Ad^1$ and $Ad^2$ is independently an acid anhydride group selected from $-SO_2$-O-$SO_2$-, $-SO_2$-O-CO- and -CO-O-$SO_2$-, and $\ell$ is 0 or 1, provided that when $\ell$ is O, $-(Ad^2$-$A^5)_\ell$, is a hydrogen atom or a bond between $A^4$ and $A^5$, in which $A^5$ is a divalent hydrocarbon group or a single bond, aminosulfonic esters having the formula $R_aR_bN$-A-$SO_3R_c$, wherein $R_a$ and $R_b$ are each independently hydrogen, $C_1$-$C_{12}$ alkyl, $C_6$-$C_{22}$ aryl, $C_7$-$C_{19}$ alkylaryl or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is hydrogen, and A is $C_1$-$C_{12}$ alkyl, $C_6$-$C_{18}$ aryl, or $C_{17}$-$C_{19}$ alkylaryl (e.g., compounds such as N-(2-hydroxyethyl) piperazine-N'-3-propanesulfonic acid, 1,4,-piperazinebis (ethanesulfonic acid), and 5-dimethylamino-1-napthalenesulfonic acid), ammonium sulfonic esters of the formula $R_aR_bR_cN^+$-A-$SO_3^-$, wherein $R_a$, $R_b$, are each independently hydrogen, $C_1$-$C_{12}$ alkyl, $C_1$-$C_{12}$ aryl, $C_7$-$C_{19}$ alkylaryl, or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is a hydrogen, and A is $C_1$-$C_{12}$ alkyl, $C_6$-$C_{18}$ aryl, or $C_7$-$C_{19}$ alkylaryl, sulfonated polystyrene, methyl acrylate-sulfonated styrene copolymer, and combinations comprising at least one of the foregoing. Quenching agents can include a combination of compounds, for example an alkyl tosylate such as n-butyl tosylate and phosphorus acid.

Branched polycarbonate can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%. Mixtures comprising linear polycarbonates and branched polycarbonates can be used. The content of the following branching structures can be less than or equal to 2,000 ppm.

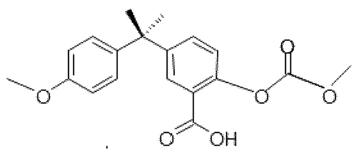 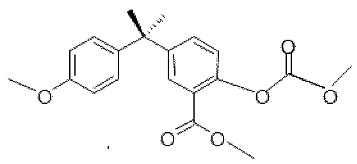 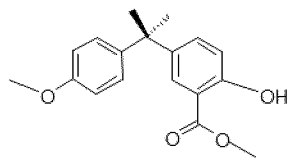

A branching agent can be employed in the polymerization and can result in an increase in polymer melt strength. The branching agent (1,1,1-tris-(hydroxyphenyl) ethane (THPE)) can be introduced to the polymerization unit, specifically, to a polymerization and/or an oligomerization vessel, as a solution of the branching agent dissolved in a branching solvent. The branching solvent selected for dissolving the branching agent can be any solvent capable of dissolving the branching agent at a level sufficient to deliver or introduce the desired amount of branching agent into the polymerization unit. The branching solvent can comprise lower alkanols, such as $C_{1-4}$ alkanols, including methanol, ethanol, propanol (such as n-propanol and isopropanol), n-butanol, or a combination comprising one or more of the foregoing.

The branching agent can be introduced in an amount such that it will result in a polycarbonate comprising up to 1.5 mole percent (mol%), specifically, up to 1.0 mol%, more specifically, up to 0.5 mol% branching agent in the final branched polycarbonate. The amount of dissolved branching agent present in the solution can be an amount of 0.5 to 50 weight percent (wt%), specifically, 5 to 40 wt%, more specifically, 15 to 35 wt% relative to the total weight of the branching agent and solvent solution. The polymerized polycarbonate can comprise a branching agent in the amount of 100 to 5,000 ppm, specifically, 500 to 4,000 ppm, more specifically, 1,000 to 3,500 ppm based on the total amount of polycarbonate repeat units.

A chainstopper can be introduced to the polymerization unit. The chainstopper can be, for example, a monofunctional phenol.

In general, melt polymerization of polycarbonate utilizes a polymerization unit that can comprise a mixer(s), a buffer vessel(s), an oligomerization vessel(s), a polymerization vessel(s), an extruder(s), a scrubber(s), a filter(s), or combinations comprising one or more of the foregoing. The melt polymerization unit can comprise a polymerization vessel, a melt filter, and an extruder, wherein the melt filter is located upstream from the extruder. The melt polymerization unit can comprise a first and a second parallel line, wherein the first parallel line is connected to the melt filter located upstream from the extruder, and wherein the second parallel line is connected to a second melt filter that is located upstream from a second extruder.

The polymerization can occur in a polymerization vessel or in a series of polymerization vessels that can have increasing temperature and vacuum. The initial polymerization vessels can be oligomerization units. After a final polymerization vessel (also referred to as a final polymerization unit), the polymer can be extruded and subjected to filtration in a melt filter.

An extrusion section of a continuous melt polycarbonate (PC) process has melt filter(s) located downstream of a final polymerization unit. The melt filter(s) can be located upstream and/or downstream of a mixing unit (e.g., an extruder). For example, an extrusion section in a continuous melt polycarbonate (PC) process is depicted in FIG. 1. FIG. 1 shows that stream 20 enters a final polymerization unit 2. Polymer stream 22 exits the final polymerization unit 2 and enters the extruder 4. From the extruder 4, extruded stream 24 enters the first melt filter 6 to produce the final product stream 26. It is noted that the melt filter could likewise be located before the extruder. During the lifetime of the first melt filter 6, melt filter 6 is used to filter the melt polycarbonate and second melt filter 8 is on standby. When it is time to change the melt filter, the first melt filter 6 is replaced with the second melt filter 8. Specifically, filter replacement can

occur via the following procedure:

1) Throughput in the polymerization unit is reduced by at least 25% by increasing the hold up in the final polymerization unit (it is noted that the monomer feed can be maintained) and the feed to the extruder, polymer stream 22, is reduced as much as possible. 2) The reaction conditions in the polymerization unit are changed. 3) The first melt filter 6 is then exchanged for the second melt filter 8 and extruded stream 24 is diverted as diverted stream 28. Extruded stream 24 is diverted due to, for example, increased residence time in the polymerization unit, where the resultant polymer no longer meets product specifications. 4) Once the melt filter is replaced, plant throughput is increased by increasing the feed to the extruder and the reaction conditions are changed to adjust the polycarbonate back into specification.

The polycarbonate produced during this time is generally off-spec polycarbonate, taking as much as 3 hours (hr) to regain the desired specifications.

The alignment procedure described above, results in many disadvantages. First, the change over time is more than one hour, a lot of off-spec polycarbonate as diverted stream 28 is generated. Second, polymer entrainment and/or an increased level of carbonized polymer can occur in the final polymerization unit due to polymer hold-up during the switching of the melt filter. Third, the hold-up in the polymerization unit cannot be controlled and is therefore dependent upon the plant operator, who must change the operating parameters both before and after the melt filter alignment. Lastly, if the pressure drop is close to the maximum allowable pressure drop or if the pressure suddenly peaks as polymer is introduced to the new melt filter, then the operator must either divert the extruded stream 24 to diverted stream 28 or reduce plant throughput by increasing polymerization unit hold-up in order to prevent failure of the melt filter.

Due to the many disadvantages of the previous procedure, the Applicants found that by adding an amount of a viscosity reducing agent to the polycarbonate (e.g., into, upstream of, or downstream of the polymerization unit, but upstream of the melt filter) they could control viscosity during the melt filter replacement and/or upstream of the polymerization unit. The replacement and alignment process can comprise: starting a flow of a viscosity reducing agent upstream of a first melt filter; redirecting a polymerized polycarbonate stream from entering the melt filter to a diverted stream; replacing the melt filter with a another melt filter (the replacement melt filter); redirecting the polymerized polycarbonate from the diverted stream into the new melt filter; and reducing the flow rate of the viscosity reducing agent. If there are two lines such that a second melt filter can be installed, the replacement and alignment process can comprise: starting a flow of a viscosity reducing agent upstream of a first melt filter; when the viscosity of the polymerized polycarbonate in the stream to the first melt filter is at a viscosity that can be introduced to the second melt filter without creating a pressure differential greater than the maximum pressure rating of the second melt filter, redirecting the lowered viscosity polymerized polycarbonate stream from entering the first melt filter into the second melt filter; and then reducing the flow rate of the viscosity reducing agent. Thereafter, the first melt filter can optionally be replaced. When the second melt filter needs to be replaced, the process is repeated, redirected the flow of the polycarbonate stream from the spent melt filter to the new melt filter.

The current process can be monitored by a feedback loop that monitors the pressure drop across the replacement melt filter and/or the a stream parameter (e.g., melt volume rate (MVR), molecular weight, and/or polymer viscosity) of the polymerized polycarbonate during introduction of the polycarbonate and that directs the adjustment of the flow rate of the viscosity reducing agent based on either or both of the measured pressure drop and the measured stream parameter.

The current process has the advantage of one or more of a hold-up can be avoided, the change over time can be reduced (for example, from three hours to less than or equal to 30 minutes, specifically, 20 to 30 minutes) and the amount of waste stream and/or off-spec polycarbonate can be reduced. Furthermore, after melt filter alignment, the rate of addition of the viscosity reducing agent can be decreased to zero and the polymer viscosity can be easily restored to its original value.

The viscosity reducing agent can be any agent that reduces the viscosity of the polycarbonate. The viscosity reducing agent can comprise an inert agent that merely acts to decrease the concentration of the polycarbonate and/or an active agent that acts to break the polymer chains. For example, the viscosity reducing agent can comprise a monomer used in the polymerization process, water, a solvent compatible with polycarbonate, carbonate compound compatible with polycarbonate, a dihydroxy compound compatible with polycarbonate, or an additional amount of a polymerization by-product. For example, if the polymerization occurring in the polymerization unit is the polymerization of a bisphenol A homopolycarbonate, then the polymerization can occur by the following scheme:

$$DPC + BPA \leftrightarrows PC + \uparrow PhOH$$

In this scheme, diphenyl carbonate (DPC) reacts with bisphenol A (BPA) to form the polycarbonate (PC) and phenol (PhOH) as a by-product. During melt filter alignment, either or both of additional phenol and diphenol carbonate can be added. When phenol is added, the phenol acts break the polymer chains, which results in a reduction in viscosity. When

diphenol carbonate is added, it acts as an active agent and breaks the polymer chains. Water addition would have a similar effect as the diphenol carbonate and would result in chain scission of the polycarbonate. This reduction in viscosity allows flow through the filter at an acceptable pressure differential through the filter, where damage to the filter can be avoided. The viscosity can then be increased (e.g., by decreasing chain scission) and the pressure can be increased, without damage to the melt filter. The viscosity reducing agent can be added in an amount of 0.01 to 5 wt%, specifically, 0.05 and 1 wt%, more specifically, 0.05 to 0.5 wt% based on the total weight of the polycarbonate stream.

The viscosity reducing agent can comprise a diaryl carbonate (such as diphenyl carbonate and bis-methylsalycilate carbonate), a dialkyl carbonate (such as dimethyl carbonate, diethyl carbonate, and dibutyl carbonate), an aryl alkyl carbonate (such as methyl phenyl carbonate and ethyl phenyl carbonate), a dihydroxy compound (such as a bisphenol (such as bisphenol A)), a monohydroxy compound (such as an alkyl alcohol (such as methanol, propanol, and butanol) and an aryl alcohol (such as phenol, paracumyl phenol, or p-tertbutyl phenol)), water or a combination comprising one or more of the foregoing. The viscosity reducing agent can comprise certain mono-phenolic compounds, mono-carboxylic acid chlorides, and mono-chloroformates. The viscosity reducing agent can comprise a mono-phenolic viscosity reducing agent (such as a monocyclic phenol such as phenol and $C_1$-$C_{22}$ alkyl-substituted phenols such as p-cumyl-phenol, dicumyl phenol, resorcinol monobenzoate, and p-and tertiary-butyl phenol); a monoether of diphenols (such as p-methoxyphenol); a $C_{8-9}$ alkyl-substituted phenol with branched chain alkyl substituents; or a combination comprising one or more of the foregoing. The viscosity reducing agent can comprise a mono-phenolic UV absorber, for example, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like. The viscosity reducing agent can comprise a mono-carboxylic acid chloride, such as monocyclic, mono-carboxylic acid chlorides (such as benzoyl chloride, $C_{1-22}$ alkyl-substituted benzoyl chloride, tolyl chloride, halogen-substituted benzoyl chloride, bromobenzoyl chloride, cinnamoyl chloride, and 4-nadimidobenzoyl chloride); polycyclic, mono-carboxylic acid chlorides (such as trimellitic anhydride chloride, and naphthoyl chloride); and combinations of monocyclic and polycyclic mono-carboxylic acid chlorides. The viscosity reducing agent can comprise a chloride of aliphatic monocarboxylic acids with less than or equal to 22 carbon atoms; a functionalized chloride of an aliphatic monocarboxylic acid (such as acryloyl chloride and methacryoyl chloride); a mono-chloroformate (such as monocyclic, mono-chloroformates (such as phenyl chloroformate, alkyl-substituted phenyl chloroformate, and p-cumyl phenyl chloroformate, toluene chloroformate); or a combination comprising one or more of the foregoing. The viscosity reducing agent can comprise diphenyl carbonate, methyl phenyl carbonate, dimethyl carbonate, diethyl carbonate, ethyl phenyl carbonate, phenol, bisphenol A, paracumyl phenol, p-tert butyl phenol, water, or a combination comprising one or more of the foregoing. The viscosity reducing agent can comprise a combination comprising one or more of the foregoing.

The viscosity reducing agent can be added before and/or into the extruder, as is illustrated in FIG. 2. FIG. 2 shows that first agent stream 30 can add a viscosity reducing agent to polymer stream 22 upstream of extruder 4 and/or second agent stream 32 can add a viscosity reducing agent directly to extruder 4. Reduced viscosity stream 34 is redirected as diverted stream 28 and first melt filter 6 is replaced with second melt filter 8. When second melt filter 8 is inline, reduced viscosity stream 34 is redirected to second melt filter 8, where second melt filter 8 can tolerate reduced viscosity stream 34 such that no damage in imparted to the membrane of second melt filter 8. The flow rate of the viscosity then be reduced allowing for an increase in the viscosity of the polycarbonate to increase and ultimately in an increase in the pressure across the melt filter. The increase in pressure across the melt filter can be a controlled increase, for example, with a feedback loop that monitors the pressure across the melt filter and adjusts the flow rate of the viscosity reducing agent. It is noted that in a melt polymerization process, where an extruder is not employed, the viscosity reducing agent can be added upstream of the melt filter, e.g., mixed in a mixing unit and/or in an inline mixer.

Specifically, the process of switching a melt filter can involve: adding a viscosity reducing agent, for example, such that the extruded polymer has an MVR of greater than or equal to 20 $cm^3$/10 min, specifically, 20 to 190 $cm^3$/10 min, more specifically, 25 to 100 $cm^3$/10 min, and yet more specifically, 30 to 70 $cm^3$/10 min, or 20 to 40 $cm^3$/10 min at 300°C under a load of 1.2 kg according to ASTM D1238-04; diverting the flow of the polymer; exchanging a first melt filter with a second melt filter; aligning the second melt filter; directing the flow of the reduced viscosity polymer through the second melt filter; and reducing the rate of addition of the viscosity reducing agent to 0. The reduction of the rate of addition of the viscosity reducing agent can be a gradual reduction and can occur via the control of a preprogrammed sequence. In other words, this step can be performed without an operator. When the addition rate of the viscosity reducing agent is back to 0, then the MVR of the polymer can return to what it was prior to its addition and can be the same as the MVR of the polymer exiting the final polymerization unit. It is noted that the current process can occur such that none of the operating conditions other than the addition of the viscosity reducing agent are changed. This is particularly important as it minimizes the transition period for changing the filter and returning to the specifically desired polycarbonate (e.g., MVR, etc.)

During the current process the endcap ratio of a polycarbonate produced during the melt filter alignment can be such that it does not drop below 55%, likewise, the endcap ratio can increase. The endcap ratio can remain greater

than or equal to 60%, specifically, greater than or equal to 65%, more specifically, greater than or equal to 75% during the alignment process. Optionally, the endcap ratio can be increased downstream from the melt filter via the addition of endcapping agents into the polymer, such as in an extruder. The endcap ratio is the ratio of phenol endgroups to total endgroup amount in % (-OH + other). When the viscosity reducing agent is a diaryl carbonate, a dialkyl carbonate, an alkyl aryl carbonate, or a combination comprising one or more of the foregoing and the endcap ratio increased relative to an initial endcap ratio.

The following examples are provided to illustrate the present process of changing the melt filter. The examples are merely illustrative and are not intended to limit devices made in accordance with the disclosure to the materials, conditions, or process parameters set forth therein.

## Examples

MVR, as used herein, was determined at 300°C under a load of 1.2 kg according to ASTM D1238-04.

In FIGs. 3-17, the solid line represents the delta pressure (pressure change) across the melt filter and the dotted line represents the MVR. In FIG. 18, the solid line represents the delta pressure (pressure change) across the melt filter and the dotted line represents the pressure in the final polymerization unit.

In Examples 1-15, the polymerization conditions including flowrates of the monomers and the catalyst as well as the temperatures and pressures in the polymerization units were held constant.

### Example 1

A continuous PC extrusion line was running at an MVR of 6.0 $cm^3$/10 min. Phenol was added to reduce the viscosity to an MVR of greater than 50 $cm^3$/10 min, FIG. 3. At this time the melt filter was changed and aligned without a reduction in throughput while maintaining an MVR at outlet of the polymerization unit of greater than 20 $cm^3$/10 min. After the melt filter was changed and aligned, the addition of phenol was reduced gradually, where, as the rate of phenol addition decreased, the viscosity of the PC increased as is seen in the decrease of MVR and the pressure drop in the melt filter gradually increased. FIG. 3 shows that after about 50 minutes (min), the MVR returned to the MVR at the outlet of the polymerization unit and after about 80 min, the pressure drop retuned to its normal operating value of about 15 bars.

### Example 2

A continuous PC extrusion line was running at an MVR of 6.0 $cm^3$/10 min. At time t=0 min, 2.07 mol/h of phenol was continuously added to the extruder inlet. The maximum MVR and the minimum viscosity were achieved after about 15 min and the melt filter was changed and aligned, FIG. 4. The initial addition rate of 2.07 mol/h ensured that the viscosity reached a safe level, where the MVR was greater than 20 $cm^3$/10 min and a low change in pressure of less than 20 bars such that the melt filter could be aligned.

After alignment, the rate of phenol addition reduced at a rate of 2.48 mol/h and the viscosity of the PC increased, as is seen in the decrease of MVR, and the pressure drop in the melt filter gradually increased. FIG. 4 shows that after about 70 min, the MVR returned to the MVR at the outlet of the polymerization unit and the pressure drop retuned to its normal operating value of about 15 bars.

It is noted that due to phenol addition PC end-cap level was reduced from 74% (at t=0 min.) to 68% (at t=15 min, where the MVR reached its maximum of about 29). This end-cap level of 68% is considered good, where 'good' is typically greater than or equal to 55%, specifically, greater than or equal to 60%, more specifically, greater than or equal to 65% and an off-spec polycarbonate was therefore not generated.

### Example 3

The process of Example 2 was repeated, except the phenol was added into barrel 4 of the extruder instead of into the extruder inlet. FIG. 5 shows that the viscosity drop was similar as compared to that of Example 2. It is noted that feeding the phenol to barrel 4 had the advantage of avoiding transition time in the pipe line from injection point to the extruder and resulted in a reduction in end-cap level to only 69% at t=25 min.

### Example 4

The process of Example 2 was repeated except that the initial rate of phenol addition was 4.14 mol/h, see FIG. 6, where it is believed that the viscosity in Example 4 did not change until after 5 min due to the residence time in the extruder. FIG. 6 shows a higher viscosity drop, to an MVR of about 62 $cm^3$/10 min, occurred due to the increased amount

of the phenol added. A 3.45 mol/h phenol reduction rate was used to reduce phenol addition back to 0 mol/hr. FIG. 6 shows that after about 60 to 70 min the MVR returned to the MVR at the outlet of the polymerization unit and the pressure drop retuned to its normal operating value of about 15 bars.

The end-cap level at the maximum MVR at t=10 min was reduced to 64% as compared to an end-cap level of 74% at t=0 min. This end-cap level of 64% is considered good and an off-spec polycarbonate was therefore not generated.

Example 5

The process of Example 2 was repeated except that the 4.14 mol/h of phenol was added to barrel 4 of the extruder instead of in extruder inlet in order to avoid inlet pipe residence time, see FIG. 7. In this example, a higher viscosity drop was observed relative to that of Example 3, where 2.0 mol/h of phenol were added in barrel 4 (compare the maximum MVR of 45 $cm^3$/10 min and 32 $cm^3$/10 min in FIGs. 7 and 5, respectively), but was less than the viscosity drop that occurred when 4.14 mol/h of phenol were added in the extruder inlet (compare an MVR of 45 $cm^3$/10 min to 61 $cm^3$/10 min in FIGs. 7 and 6, respectively).

The end-cap level dropped from 69% at t=0 min to 65% at t=10 min.

Example 6

A continuous PC extrusion line was running at an MVR of 6.0 $cm^3$/10 min and, at t=0 min, 2.00 mol/h of water were fed to extruder inlet. The viscosity drop and the change in pressure are shown in FIG. 8. FIG. 8 shows that the viscosity only dropped to an MVR of 12 $cm^3$/10 min. This value was not enough to ensure a safe alignment of the melt filter. The water addition was then reduced to 0 mol/h.

Example 7

The process of Example 6 was repeated except that 2.0 mol/h of water was fed to the extruder barrel. The viscosity drop and the change in pressure are shown in FIG. 9. Just as when 2.0 mol/h of water was added to the extruder inlet did not achieve a high enough pressure drop, neither did adding 2.0 mol/h of water to the extruder barrel.

Example 8

The process of Example 6 was repeated, except that 4.0 mol/h of water was added to the extruder inlet. The maximum MVR and the minimum viscosity were achieved after about 15 min and the melt filter was changed and aligned, FIG. 10. After alignment, the water addition was reduced at a rate of 3.3 mol/h. FIG. 10 shows that increasing the flow rate of water to the extruder to 4.0 mol/h resulted in a viscosity drop to a maximum MVR of about 40 $cm^3$/10 min. The melt filter was successfully aligned.

Example 9

The process of Example 6 was repeated except that 4.0 mol/h of water was fed to the extruder barrel. The viscosity drop and the change in pressure are shown in FIG. 11. FIG. 11 shows that when 4.0 mol/h of water were added to the extruder barrel instead of the extruder inlet, only a slight drop in viscosity to an MVR of only 16 $cm^3$/10 min was achieved and the melt filter could not successfully be aligned. It is believed that a lesser drop in viscosity was achieved due to the reduction in the residence time of the water in the extruder.

Example 10

The process of Example 6 was repeated except that 11.7 mol/h of water was fed to the extruder inlet. The maximum MVR and the minimum viscosity were achieved after about 15 min and the melt filter was changed and aligned, FIG. 12. FIG. 12 shows that the viscosity drop was such that the maximum MVR was greater than 200 $cm^3$/10 min. It is noted that the drop in viscosity reduced the end-cap level such that an off-spec polycarbonate was produced.

Example 11

The process of Example 6 was repeated except that 11.7 mol/h of water was fed to the extruder barrel. The MVR reached a value of about 23 $cm^3$/10 min after about 15 min and the melt filter was changed and aligned, FIG. 13. After alignment, a 9.3 mol/h phenol reduction rate was used to reduce the water addition. In this example, the end-cap level was reduced from a value of 65% at t=0 min to 60% at t=25 min. An off-spec polycarbonate was not generated.

Example 12

A continuous PC extrusion line was running at an MVR of 6.0 $cm^3$/10 min. At t=0 min, 2.0 mol/h of DPC was fed to the extruder inlet. The viscosity drop and the change in pressure are shown in FIG. 14. The melt filter was exchanged and aligned when the polycarbonate reached an MVR of about 35 $cm^3$/10 min. In this example, the end-cap level actually increased from a value of 66% at t=0 min to 78% at t=25 min and an off-spec polycarbonate was therefore not generated.

Example 13

The process of Example 12 was repeated except that 2.0 mol/h of DPC was fed to the extruder barrel. The viscosity drop and the change in pressure are shown in FIG. 15. The melt filter was exchanged and aligned when the polycarbonate reached an MVR of about 33 $cm^3$/10 min. Just as in Example 12, the end-cap level increased from a value of 68% at t=0 min to 78% at t=25 min and an off-spec was not generated.

Example 14

The process of Example 12 was repeated except that 1.0 mol/h of DPC was fed to the extruder inlet. The viscosity drop and the change in pressure are shown in FIG. 16. FIG. 16 shows that the viscosity only dropped to an MVR of about 12 $cm^3$/10 min. This value was not enough to ensure a safe alignment of the melt filter. The water addition was then reduced to 0 mol/h. In this example, the end-cap level increased by less than 10% and an off-spec polycarbonate was not generated.

Example 15

The process of Example 12 was repeated except that 1.0 mol/h of DPC was fed to the extruder barrel. The viscosity drop and the change in pressure are shown in FIG. 17. FIG. 17 shows that the viscosity only dropped to an MVR of about 19 $cm^3$/10 min. This value was not enough to ensure a safe alignment of the melt filter. The water addition was then reduced to 0 mol/h. In this example, the end-cap level increased by less than 10% and an off-spec polycarbonate was not generated

Example 16

FIG. 18 illustrates an alignment process, where the polymerization conditions were changed in order to reduce the delta pressure across the melt filter in order to exchange the melt filter for a new one. In other words, the polymer viscosity was reduced by increasing the pressure in the final polymerization unit and not by adding a viscosity reducing agent. After the viscosity reduction, the pressure in the final polymerization unit was then returned to normal operating conditions of about 1 mbar.

Specifically, FIG. 18 shows the pressure change across the melt filter and the pressure in the final polymerization unit as a function of time. At time t=0 min, the final polymerization unit was operated at a high pressure of greater than 15 mbar to result in a low delta pressure across the melt filter of less than 5 bar so that the melt filter could be changed. The pressure in the final polymerization unit was then progressively decreased to 1 mbar over approximately 200 min. A large amount of off-spec polycarbonate was produced in this transition.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

All ranges disclosed herein are inclusive of the endpoints, and the endpoints are independently combinable with each other (e.g., ranges of "up to 25 wt%, or, more specifically, 5 to 20 wt%", is inclusive of the endpoints and all intermediate values of the ranges of "5 to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

## Claims

1. A continuous melt polycarbonate polymerization process, comprising:

   melt polymerizing a carbonate compound and dihydroxy compound in the presence of a catalyst composition to form a polymerized polycarbonate;
   adding a viscosity reducing agent to polymerized polycarbonate upstream of a first melt filter to form an adjusted polycarbonate;
   replacing the first melt filter with a replacement melt filter;
   introducing the adjusted polycarbonate to the replacement melt filter; and reducing the addition rate of the viscosity reducing agent until the addition rate is 0 mol/hr.

2. The process of Claim 1, wherein replacing the first melt filter further comprises ceasing a polymerized polycarbonate flow to the first melt filter and aligning the replacement melt filter.

3. The process of Claim 2, wherein ceasing the polymerized polycarbonate flow comprises diverting the polymerized polycarbonate flow.

4. The process of any of Claims 1-3, wherein reducing the addition rate of the viscosity reducing agent further comprises monitoring a rate parameter, wherein the parameter is at least one of a pressure drop across the replacement melt filter and/or a stream parameter of the adjusted polycarbonate stream, wherein the rate at which the flow rate of the viscosity reducing agent is reduced is based upon the rate parameter.

5. The process of any of Claims 1-3, wherein the reducing occurs at preprogrammed reduction rate.

6. The process of any of Claims 1-5, wherein the sufficient viscosity reducing agent is added to the polymerized polycarbonate so that the adjusted polycarbonate has a MVR of greater than or equal to 20 cm3/10 min at 300°C under a load of 1.2 kg according to ASTM D1238-04.

7. The process of Claim 6, wherein the MVR is 20 to 190 cm3/10 min.

8. The process of any of Claims 1-7, wherein the viscosity reducing agent comprises a monomer used in the polymerization process, water, a solvent compatible with polycarbonate, a dialkyl carbonate, a diaryl carbonate, an alkyl aryl carbonate, an additional amount of a polymerization by-product, or a combination comprising one or more of the foregoing.

9. The process of any of Claims 1-8, wherein the polycarbonate is a homopolycarbonate derived from bisphenol A and di phenyl carbonate and the viscosity reducing agent comprises di phenyl carbonate, methyl phenyl carbonate, dimethyl carbonate, diethyl carbonate, ethyl phenyl carbonate, phenol, bisphenol A, paracumyl phenol, p-tertbutyl phenol, water, or a combination comprising one or more of the foregoing.

10. The process of any of Claims 1-9, wherein an endcap ratio of polycarbonate in the adjusted polycarbonate stream is greater than or equal to 55%, wherein the endcap ratio is the ratio of phenol endgroups to total endgroup amount in %.

11. The process of any of Claims 1-10, wherein the process produces greater than or equal to 100,000 ton/yr of melt polycarbonate.

12. The process of any of Claims 1-11, wherein the catalyst comprises at least one of the foregoing tetramethyl phosphonium hydroxide, tetramethyl phosphonium acetate, tetramethyl phosphonium formate, tetrabutyl phosphonium hydroxide, tetrabutyl phosphonium acetate (TBPA), tetraphenyl phosphonium acetate (TPPA), tetraphenyl phosphonium phenoxide.

13. The process of any of Claims 1-12, wherein the adding a viscosity reducing agent occurs after the final polymerization

of the polymerized polycarbonate.

## Patentansprüche

1. Kontinuierliches Schmelzpolycarbonatpolymerisationsverfahren, umfassend:

   Schmelzpolymerisieren einer Carbonatverbindung und Dihydroxyverbindung in Gegenwart einer Katalysatorzusammensetzung, um ein polymerisiertes Polycarbonat zu bilden;
   Zugeben eines viskositätsreduzierenden Mittels zu polymerisiertem Polycarbonat stromaufwärts eines ersten Schmelzefilters, um ein angepasstes Polycarbonat zu bilden;
   Ersetzen des ersten Schmelzefilters durch einen Ersatzschmelzefilter;
   Einführen des angepassten Polycarbonats in den Ersatzschmelzefilter, und Reduzieren der Zugaberate des viskositätsreduzierenden Mittels, bis die Zugaberate 0 Mol/h beträgt.

2. Verfahren nach Anspruch 1, wobei ein Ersetzen des ersten Schmelzefilters ferner ein Beenden eines Flusses des polymerisierten Polycarbonats zu dem ersten Schmelzefilter und Ausrichten des Ersatzschmelzefilters umfasst.

3. Verfahren nach Anspruch 2, wobei ein Beenden des Flusses des polymerisierten Polcarbonats ein Umleiten des Flusses des polymerisierten Polycarbonats umfasst.

4. Verfahren nach einem der Ansprüche 1-3, wobei ein Reduzieren der Zugaberate des viskositätsreduzierenden Mittels ferner ein Überwachen eines Ratenparameters umfasst, wobei der Parameter mindestens eines aus einem Druckabfall durch den Ersatzschmelzefilter und/oder einem Flussparameter des Flusses des angepassten Polycarbonats ist, wobei die Rate, mit der die Flussrate des viskositätsreduzierenden Mittels reduziert wird, auf dem Ratenparameter basiert.

5. Verfahren nach einem der Ansprüche 1-3, wobei das Reduzieren zu einer vorprogrammierten Reduktionsrate auftritt.

6. Prozess nach einem der Ansprüche 1-5, wobei das ausreichende viskositätsreduzierende Mittel zu dem polymerisierten Polycarbonat zugegeben wird, sodass das angepasste Polycarbonat einen MVR aufweist, der gemäß ASTM D1238-04 bei 300 °C unter einer Last von 1,2 kg größer oder gleich 20 cm3/10 min ist.

7. Verfahren nach Anspruch 6, wobei der MVR 20 bis 190 cm3/10 min ist.

8. Verfahren nach einem der Ansprüche 1-7, wobei das viskositätsreduzierende Mittel ein Monomer, das in dem Polymerisationsverfahren verwendet wird, Wasser, ein mit Polycarbonat kompatibles Lösungsmittel, ein Dialkylcarbonat, ein Diarylcarbonat, ein Alkylarylcarbonat, eine zusätzliche Menge eines Polymerisationsnebenprodukts oder eine Kombination, die eines oder mehrere der Vorangehenden umfasst, umfasst.

9. Verfahren nach einem der Ansprüche 1-8, wobei das Polycarbonat ein Homopolycarbonat, das von Bisphenol A und Diphenylcarbonat abgeleitet ist, und das viskositätsreduzierende Mittel Diphenylcarbonat, Methylphenylcarbonat, Dimethylcarbonat, Diethylcarbonat, Ethylphenylcarbonat, Phenol, Bisphenol A, Paracumylphenol, p-Tertbutylphenol, Wasser oder eine Kombination, die eines oder mehrere der Vorangehenden umfasst, umfasst.

10. Verfahren nach einem der Ansprüche 1-9, wobei ein Endcap-Verhältnis von Polycarbonat in dem Fluss des angepassten Polycarbonats größer oder gleich 55 % ist, wobei das Endcap-Verhältnis das Verhältnis von Phenolendgruppen zu der gesamten Endgruppenmenge in % ist.

11. Verfahren nach einem der Ansprüche 1-10, wobei das Verfahren größer oder gleich 100.000 Tonnen/Jahr Schmelzpolycarbonat produziert.

12. Verfahren nach einem der Ansprüche 1-11, wobei der Katalysator mindestens eines aus den vorangehenden Tetramethylphosphoniumhydroxid, Tetramethylphosphoniumacetat, Tetramethylphosphoniumformat, Tetrabutylphosphoniumhydroxid, Tetrabutylphosphoniumacetat (TBPA), Tetraphenylphosphoniumacetat (TPPA), Tetraphenylphosphoniumphenoxid umfasst.

13. Verfahren nach einem der Ansprüche 1-12, wobei das Zugeben eines viskositätsreduzierenden Mittels nach der

Endpolymerisation des polymerisierten Polycarbonats auftritt.

## Revendications

1. Procédé de polymérisation en continu de polycarbonate à l'état fondu, comprenant :

   la polymérisation à l'état fondu d'un composé carbonate et d'un composé dihydroxy en présence d'une composition de catalyseur pour former un polycarbonate polymérisé ;
   l'ajout d'un agent réducteur de viscosité au polycarbonate polymérisé en amont d'un premier filtre à matière fondue pour former un polycarbonate ajusté ;
   le remplacement du premier filtre à matière fondue par un filtre à matière fondue de remplacement ;
   l'introduction du polycarbonate ajusté dans le filtre à matière fondue de remplacement ; et
   la réduction de la vitesse d'addition de l'agent réducteur de viscosité jusqu'à ce que la vitesse d'addition soit de 0 mol/h.

2. Procédé selon la revendication 1, dans lequel le remplacement du premier filtre à matière fondue comprend en outre l'arrêt d'un écoulement de polycarbonate polymérisé vers le premier filtre à matière fondue et l'alignement du filtre à matière fondue de remplacement.

3. Procédé selon la revendication 2, dans lequel l'arrêt de l'écoulement de polycarbonate polymérisé comprend la déviation de l'écoulement de polycarbonate polymérisé.

4. Procédé selon l'une quelconque des revendications 1 à 3, dans lequel la réduction de la vitesse d'addition de l'agent réducteur de viscosité comprend en outre la surveillance d'un paramètre de vitesse, dans lequel le paramètre est au moins l'un parmi une chute de pression à travers le filtre à matière fondue de remplacement et / ou un paramètre d'écoulement de l'écoulement de polycarbonate ajusté, dans lequel la vitesse à laquelle la vitesse d'écoulement de l'agent réducteur de viscosité est réduite est basée sur le paramètre de vitesse.

5. Procédé selon l'une quelconque des revendications 1 à 3, dans lequel la réduction se produit à une vitesse de réduction préprogrammée.

6. Procédé selon l'une quelconque des revendications 1 à 5, dans lequel l'agent réducteur de viscosité suffisant est ajouté au polycarbonate polymérisé de sorte que le polycarbonate ajusté ait un MVR supérieur ou égal à 20 cm3/10 min à 300 °C sous une charge de 1,2 kg selon ASTM D1238-04.

7. Procédé selon la revendication 6, dans lequel le MVR est de 20 à 190 cm3/10 min.

8. Procédé selon l'une quelconque des revendications 1 à 7, dans lequel l'agent réducteur de viscosité comprend un monomère utilisé dans le processus de polymérisation, de l'eau, un solvant compatible avec le polycarbonate, un carbonate de dialkyle, un carbonate de diaryle, un carbonate d'alkylaryle, une quantité supplémentaire d'un sous-produit de polymérisation, ou d'une combinaison comprenant un ou plusieurs des éléments précédents.

9. Procédé selon l'une quelconque des revendications 1 à 8, dans lequel le polycarbonate est un homopolycarbonate dérivé de bisphénol A et de diphényl carbonate et l'agent réducteur de viscosité comprend le di-phényl carbonate, le méthyl phényl carbonate, le diméthyl carbonate, le diéthyl carbonate, l'éthyl phényl carbonate, le phénol, le bisphénol A, le paracumylphénol, le p-tertbutylphénol, l'eau, ou une combinaison comprenant un ou plusieurs des éléments précédents.

10. Procédé selon l'une quelconque des revendications 1 à 9, dans lequel un rapport de coiffe d'extrémité de polycarbonate dans l'écoulement de polycarbonate ajusté est supérieur ou égal à 55%, dans lequel le rapport de coiffe d'extrémité est le rapport des groupes terminaux de phénol par rapport à la quantité totale de groupes terminaux en %.

11. Procédé selon l'une quelconque des revendications 1 à 10, dans lequel le procédé produit une quantité supérieure ou égale à 100000 tonnes/an de polycarbonate fondu.

12. Procédé selon l'une quelconque des revendications 1 à 11, dans lequel le catalyseur comprend au moins l'un des éléments précédents, l'hydroxyde de tétraméthylphosphonium, l'acétate de tétraméthylphosphonium, le formiate

de tétraméthylphosphonium, l'hydroxyde de tétrabutylphosphonium, l'acétate de tétrabutylphosphonium (TBPA), l'acétate de tétraphénylphosphonium (TPPA), le phénoxyde de tétraphénylphosphonium.

**13.** Procédé selon l'une quelconque des revendications 1 à 12, dans lequel l'addition d'un agent réducteur de viscosité a lieu après la polymérisation finale du polycarbonate polymérisé.

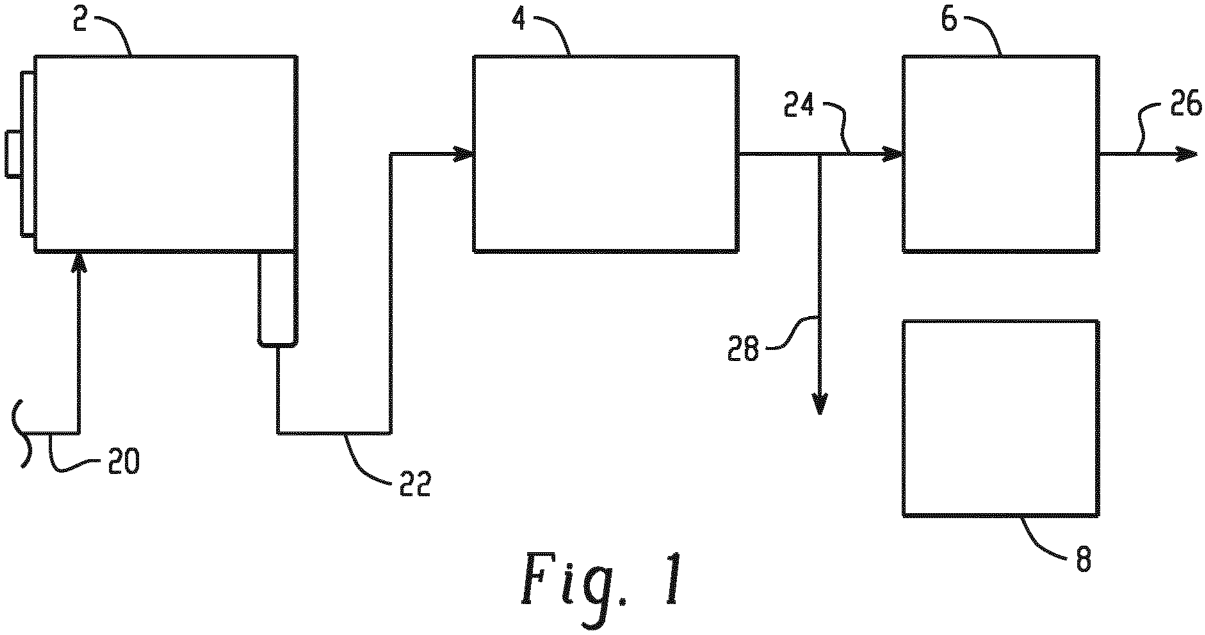


Fig. 1

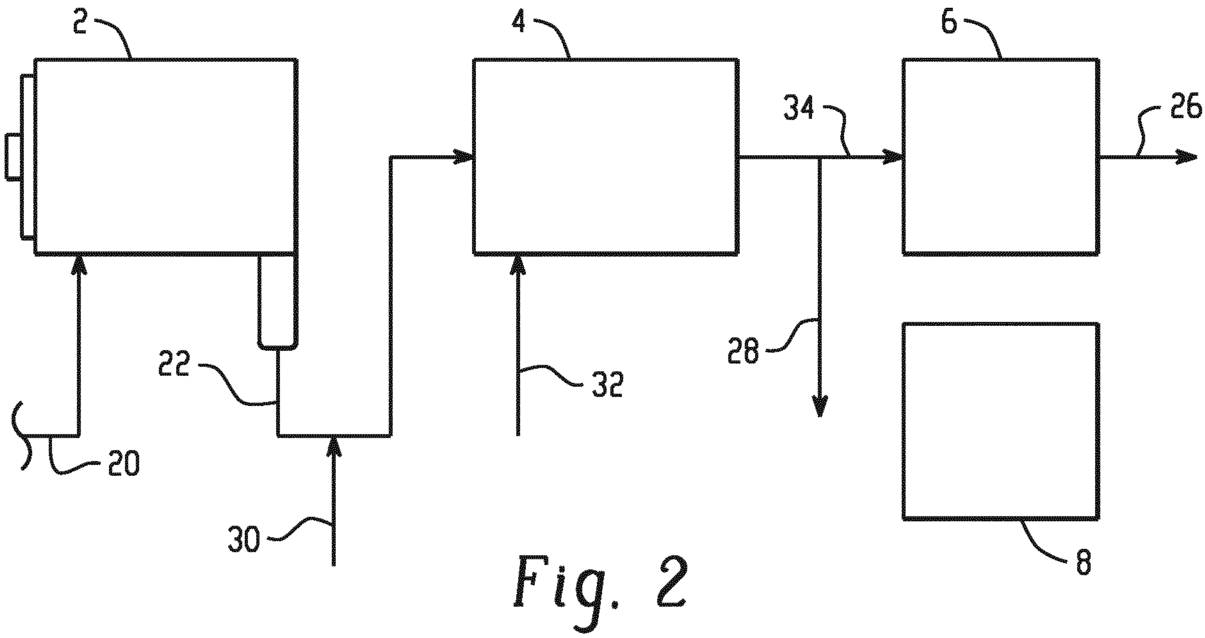


Fig. 2

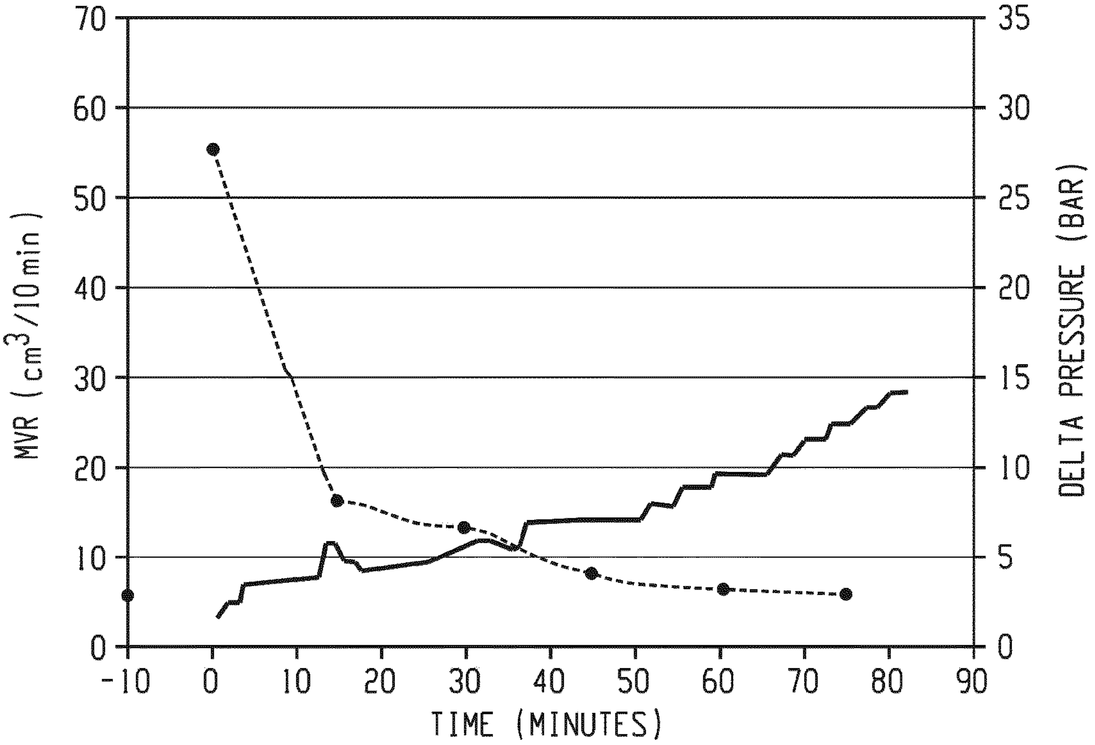
70
60
50
40
30
20
10
0
35
30
25
20
15
10
5
0
-10
0
10
20
30
40
50
60
70
80
90
TIME (MINUTES)
MVR ( cm3/10 min )
DELTA PRESSURE (BAR)

Fig. 3

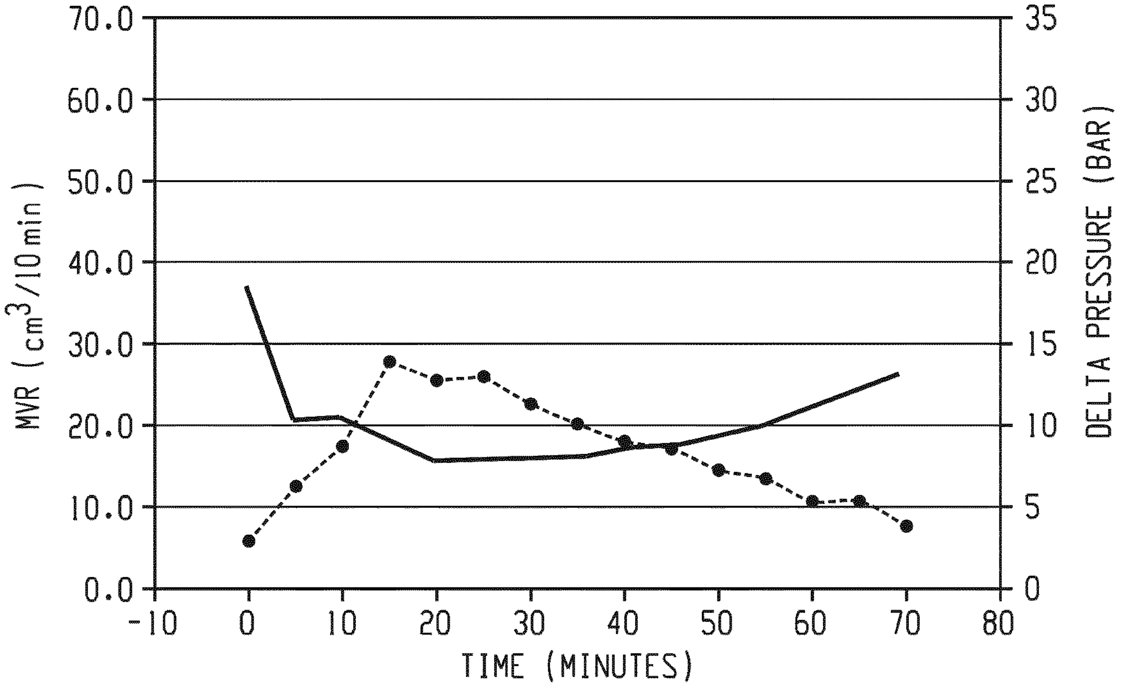
70.0
60.0
50.0
40.0
30.0
20.0
10.0
0.0
35
30
25
20
15
10
5
0
-10
0
10
20
30
40
50
60
70
80
TIME (MINUTES)
MVR ( cm3/10 min )
DELTA PRESSURE (BAR)

Fig. 4

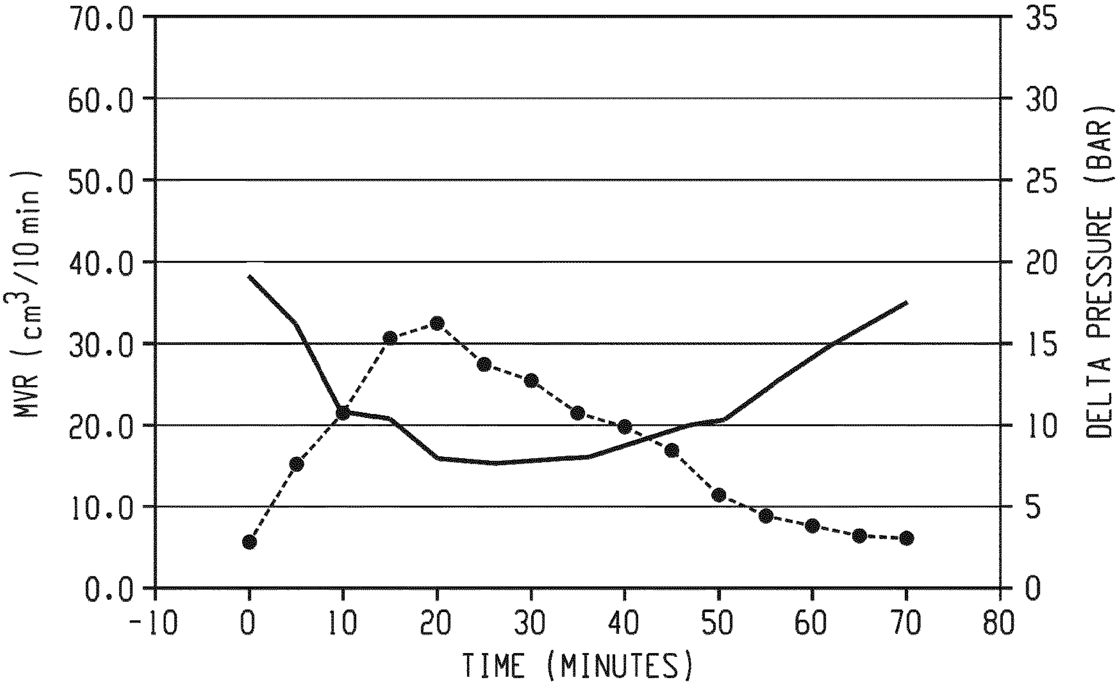
70.0
60.0
50.0
40.0
30.0
20.0
10.0
0.0
MVR ( cm3/10 min )
35
30
25
20
15
10
5
0
DELTA PRESSURE (BAR)
-10
0
10
20
30
40
50
60
70
80
TIME (MINUTES)

Fig. 5

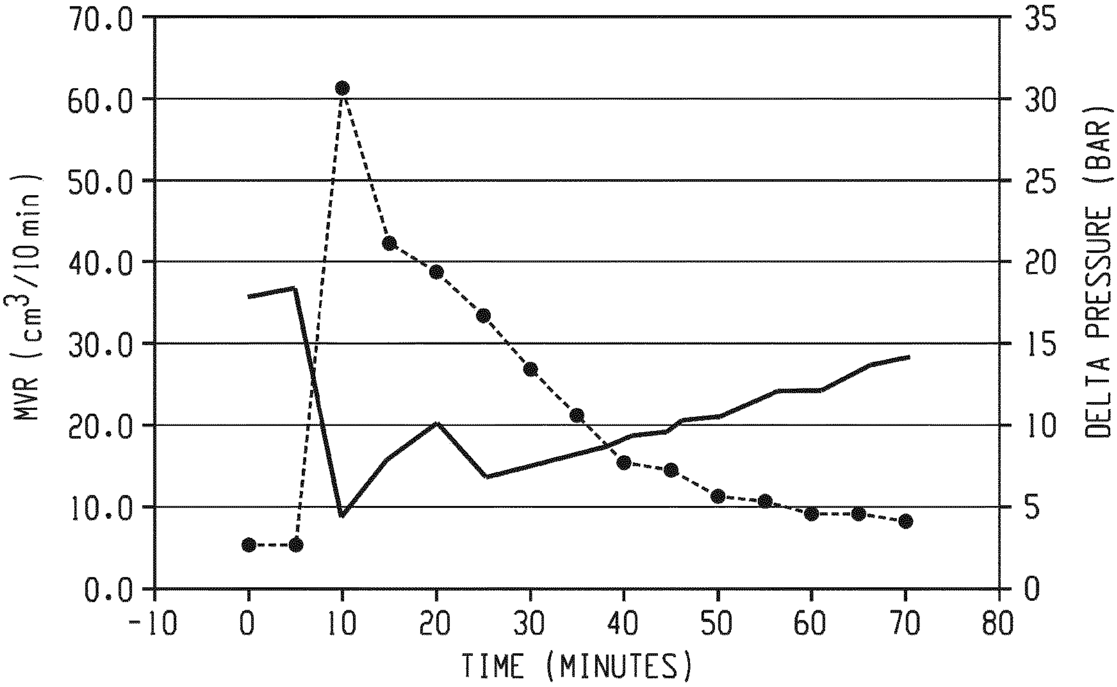
70.0
60.0
50.0
40.0
30.0
20.0
10.0
0.0
MVR ( cm3/10 min )
35
30
25
20
15
10
5
0
DELTA PRESSURE (BAR)
-10
0
10
20
30
40
50
60
70
80
TIME (MINUTES)

Fig. 6

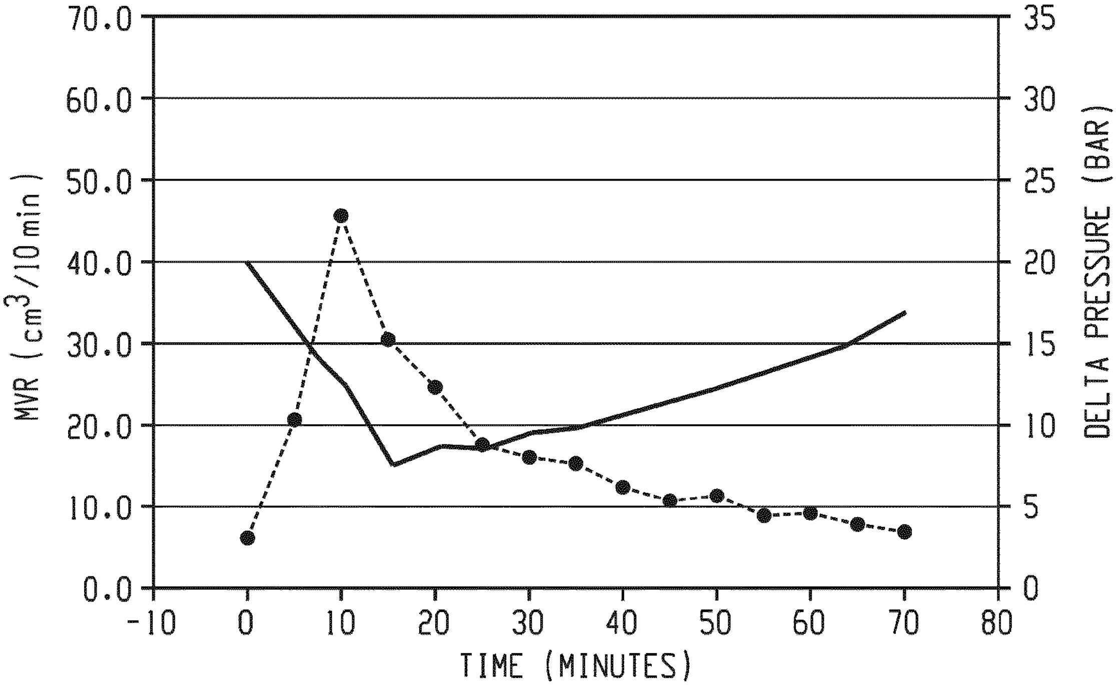
70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)

Fig. 7

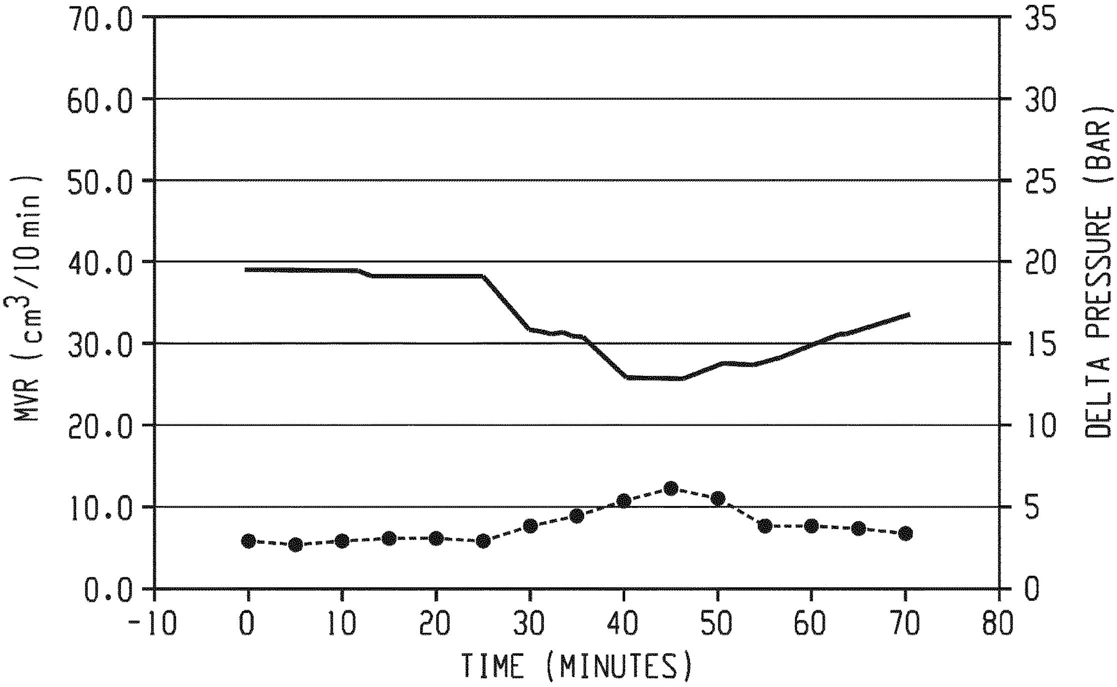
70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)

Fig. 8

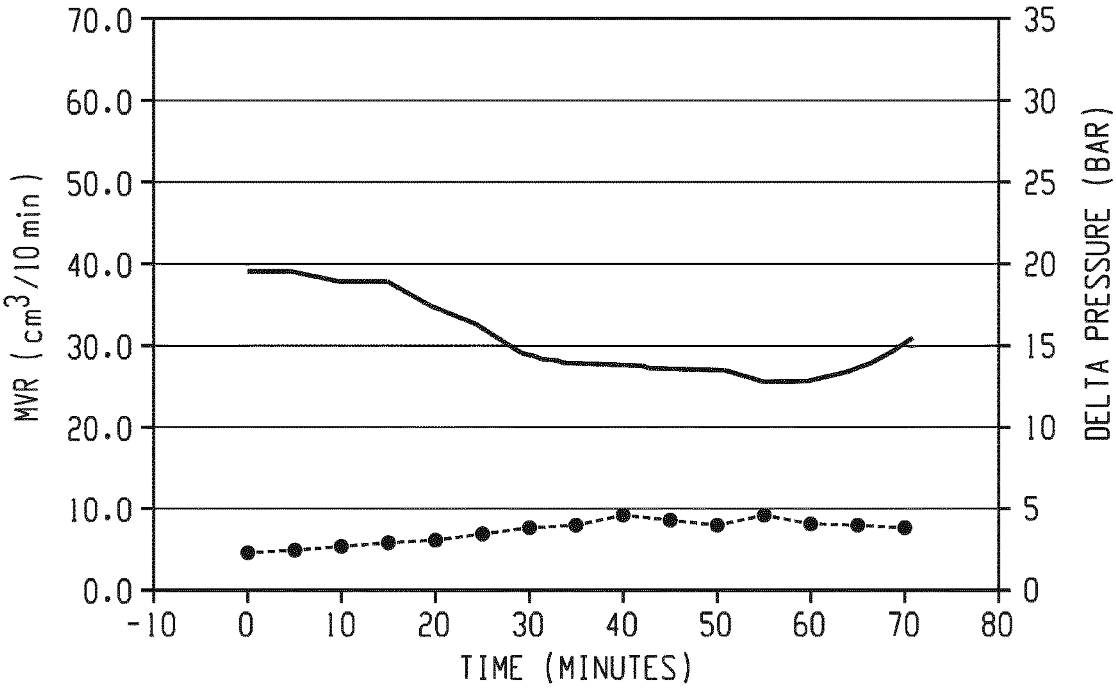

70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)


Fig. 9

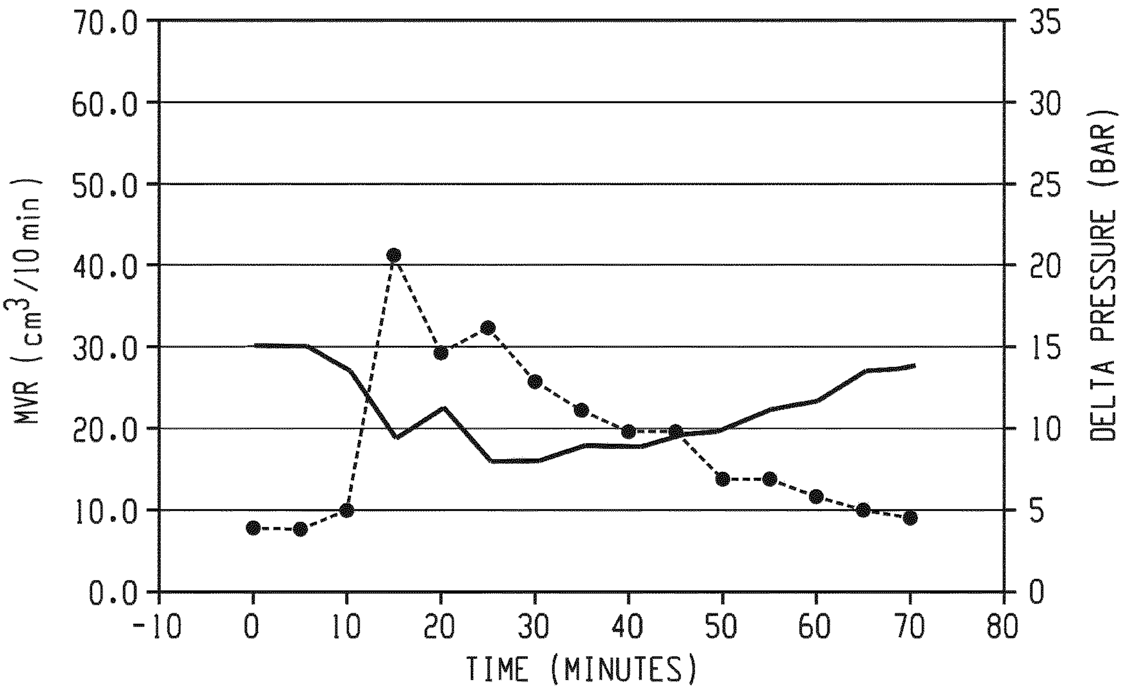

70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)


Fig. 10

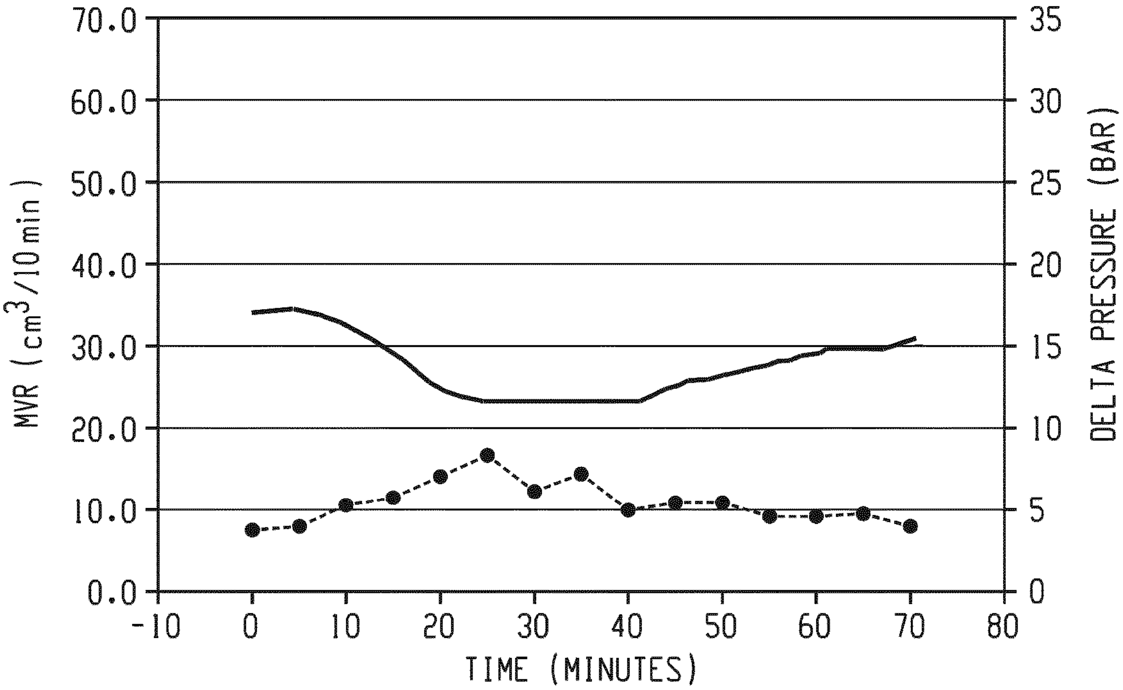
70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)

Fig. 11

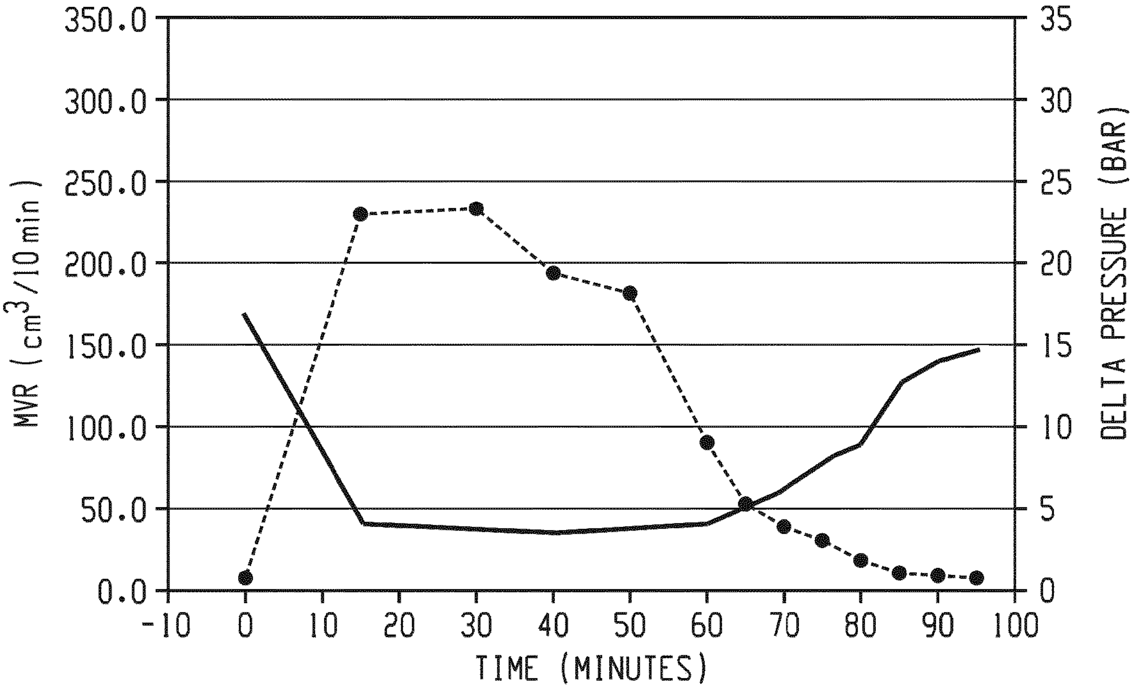
350.0
300.0
250.0
200.0
150.0
100.0
50.0
0.0
MVR ( $cm^3$/10 min )
35
30
25
20
15
10
5
0
DELTA PRESSURE (BAR)
-10
0
10
20
30
40
50
60
70
80
90
100
TIME (MINUTES)

Fig. 12

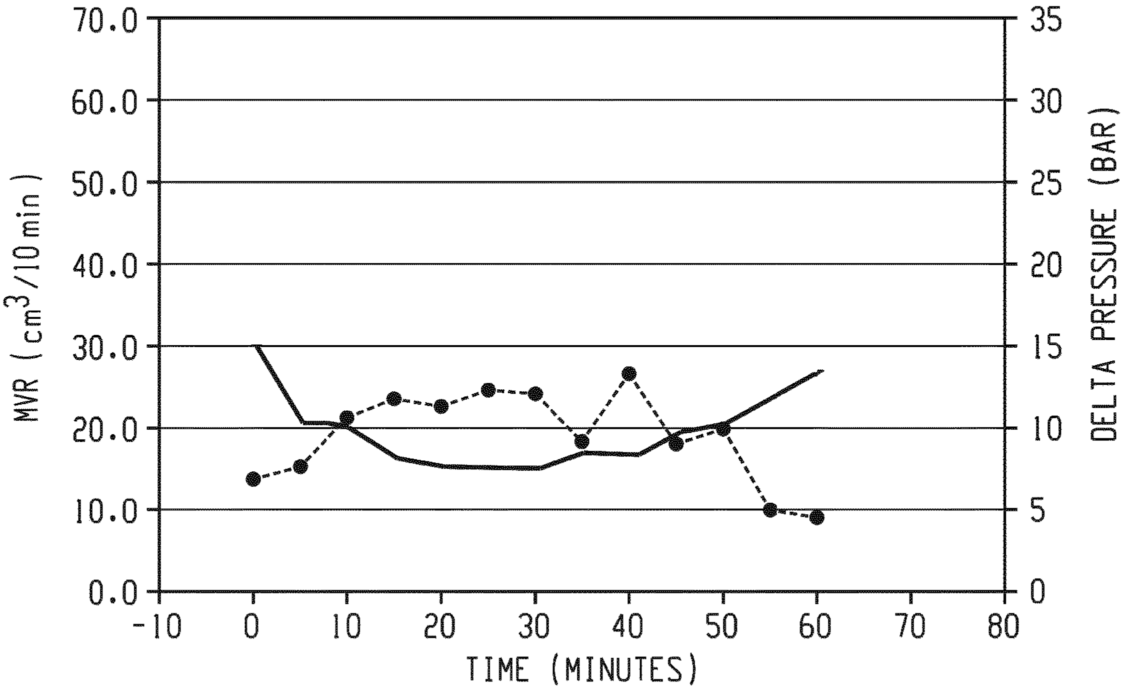
70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)

Fig. 13

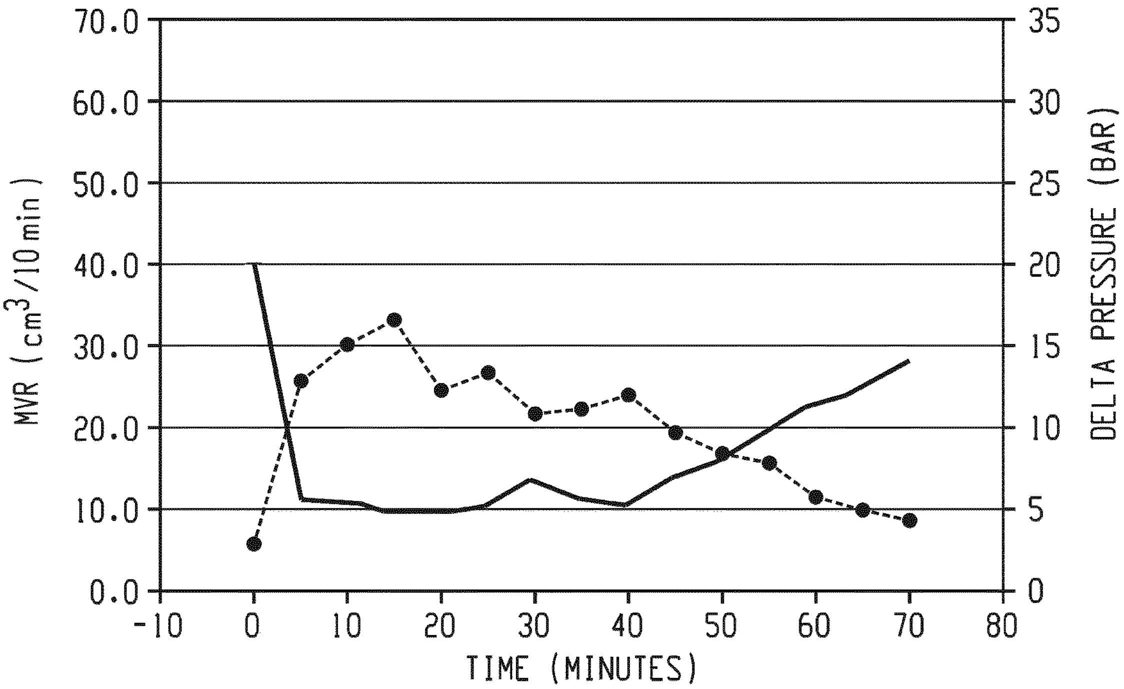
70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)

Fig. 14

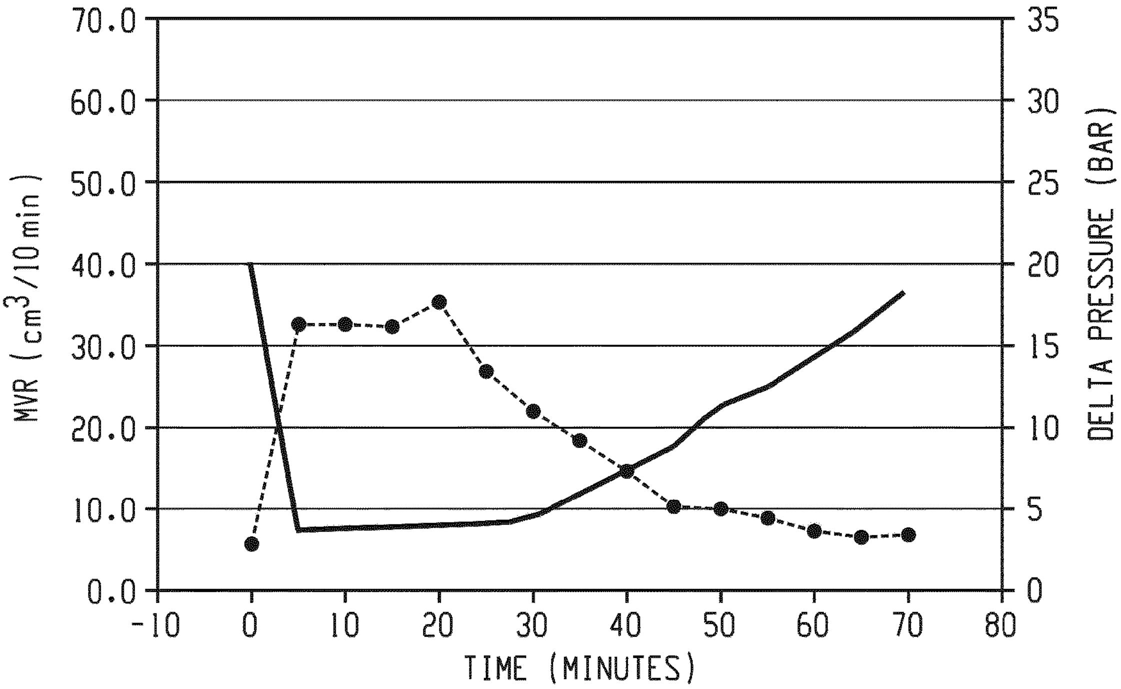
70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)

Fig. 15

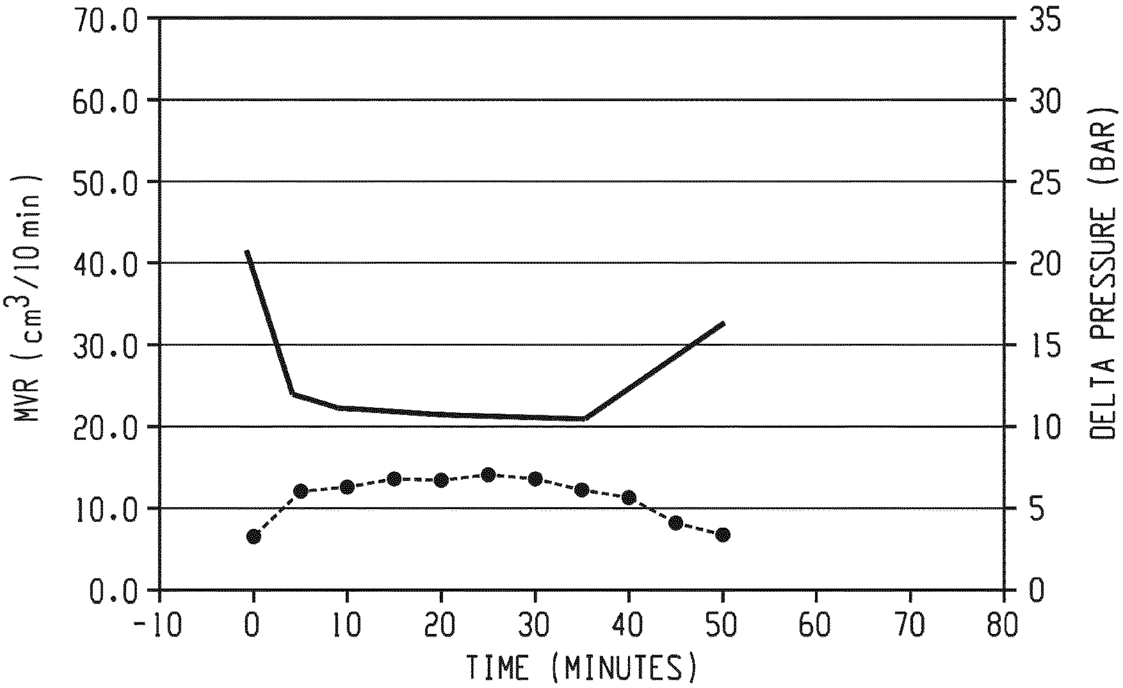
70.0
60.0
50.0
40.0
30.0
20.0
10.0
0.0
MVR ( $cm^3$/10 min )
35
30
25
20
15
10
5
0
DELTA PRESSURE (BAR)
-10
0
10
20
30
40
50
60
70
80
TIME (MINUTES)

Fig. 16

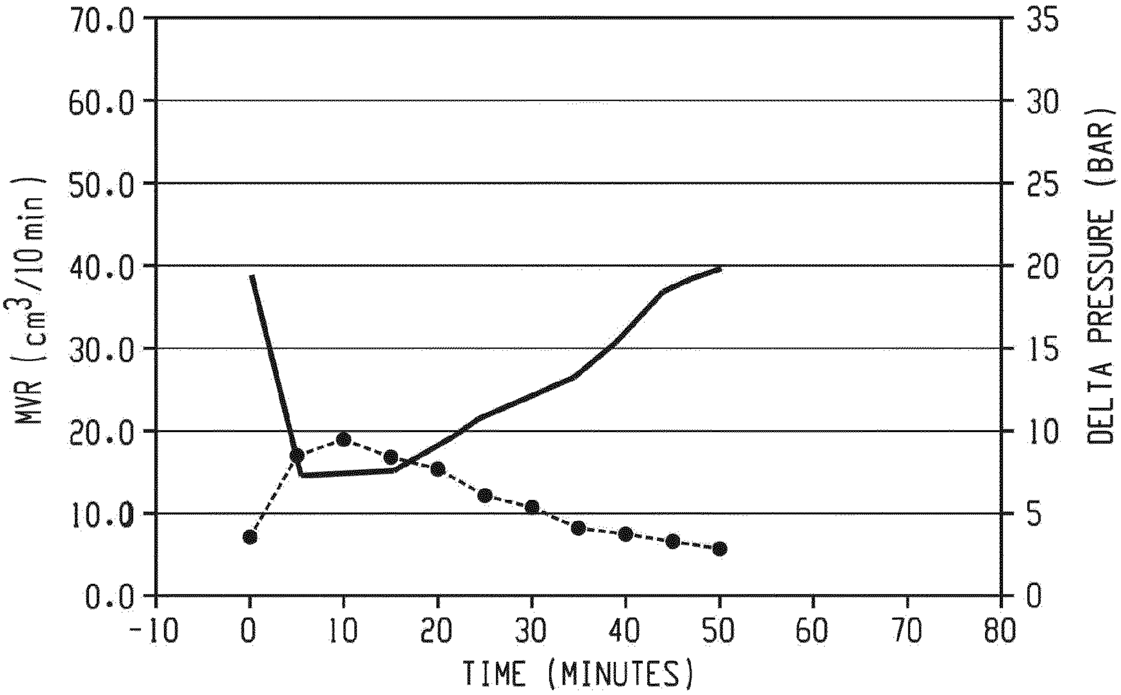
70.0
60.0
50.0
40.0
30.0
20.0
10.0
0.0
MVR (cm3/10 min)
35
30
25
20
15
10
5
0
DELTA PRESSURE (BAR)
-10
0
10
20
30
40
50
60
70
80
TIME (MINUTES)

Fig. 17

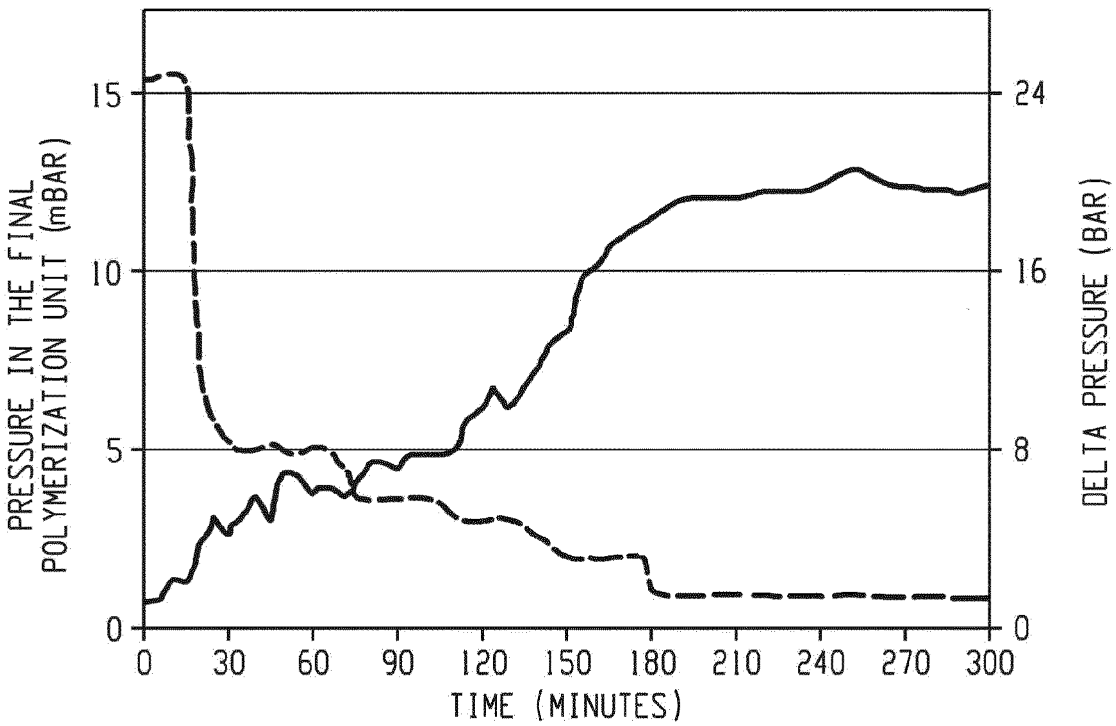
15
10
5
0
PRESSURE IN THE FINAL POLYMERIZATION UNIT (mBAR)
24
16
8
0
DELTA PRESSURE (BAR)
0
30
60
90
120
150
180
210
240
270
300
TIME (MINUTES)

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1760105 A